# EUROPÄISCHE PATENTSCHRIFT

(11) **EP 2 725 044 B1**
(45) Veröffentlichungstag und Bekanntmachung des Hinweises auf die Patenterteilung: **21.06.2017**
(21) Anmeldenummer: 12189728.4
(22) Anmeldetag: 24.10.2012
(51) Int. Cl.: C08G 18/10, C08G 18/12, C08G 18/28, C08G 18/38, C08G 18/42, C08G 18/44, C08G 18/48, C08G 18/71, C08G 18/77

(54) **Alkoxysilanterminiertes Präpolymer auf Basis von Polyethercarbonatpolyolen für Sprühschäume**
Alkoxysilane terminated prepolymer based on polyethercarbonate polyols for spray foams
Prépolymère à terminaison alkoxysilane à base de polyols de polyéther carbonate pour mousse à atomiser

(43) Veröffentlichungstag der Anmeldung: 30.04.2014
(73) Patentinhaber: Covestro Deutschland AG, 51373 Leverkusen (DE)
(72) Erfinder: Köcher, Jürgen, 40764 Langenfeld (DE); Hoffmann Ute, 51375 Leverkusen (DE)
(74) Vertreter: Levpat

(56) Entgegenhaltungen:
- WO-A1-2008/092767
- DE-A1- 19 914 884
- DE-A1-102009 057 597
- US-A1- 2006 189 234

## Beschreibung

Die vorliegende Erfindung betrifft ein alkoxysilanterminiertes Präpolymer, das durch Umsetzung wenigstens eines Polyols, eines Polyisocyanats und eines Alkoxysilans, das wenigstens eine Isocyanat und/oder isocyanatreaktive Gruppe aufweist, herstellbar ist. Weitere Gegenstände der Erfindung sind ein Verfahren zur Herstellung des erfindungsgemäßen alkoxysilanterminierten Präpolymers, sowie eine Zusammensetzung und ein Mehrkomponentensystem enthaltend ein erfindungsgemäßes alkoxysilanterminiertes Präpolymer. Die vorliegende Erfindung betrifft des Weiteren einen Formkörper, erhältlich durch Polymerisation des erfindungsgemäßen alkoxysilanterminierten Präpolymers, einer erfindungsgemäßen Zusammensetzung oder eines erfindungsgemäßen Mehrkomponentensystems. Ein weiterer Gegenstand der Erfindung ist eine Druckdose, enthaltend ein erfindungsgemäßes alkoxysilanterminiertes Präpolymer, eine erfindungsgemäße Zusammensetzung oder ein erfindungsgemäßes Mehrkomponentensystem.

Sprühbare Schäume sind aus dem Stand der Technik bekannt. So existieren sprühbare Montageschäume, die zum Ausfüllen von Hohlräumen, beispielsweise im Baubereich eingesetzt werden. Sie werden insbesondere zum Auffüllen von Fugen und Hohlräumen zwischen Fensterrahmen und Türzargen und dem umliegenden Mauerwerk verwendet und zeichnen sich durch gute feuchtigkeitsisolierende Eigenschaften, sowie gute Wärmedämmeigenschaften aus. Weitere Anwendungsgebiete solcher sprühbaren Mehrkomponentensysteme sind die Verwendung zur Isolierung von Rohrleitungen oder das Ausschäumen von Hohlräumen in technischen Geräten.

Typischerweise handelt es sich bei diesen vorgenannten Montageschäumen um Polyurethanschäume (PU-Schäume). Die diesen Schäumen zugrundeliegenden Zusammensetzungen bestehen aus unvernetzten Präpolymeren, die über eine hohe Anzahl freier Isocyanatgruppen verfügen. Die freien Isocyanatgruppen sind sehr reaktiv und können bereits bei normaler Umgebungstemperatur unter Einfluss von Wasser bzw. Feuchtigkeit miteinander reagieren und ein polymeres Netzwerk aus den Präpolymeren aufbauen. Neben der Luftfeuchtigkeit dienen auch Alkohole mit zwei oder mehr OH-Gruppen, entsprechende Thiole sowie primäre oder sekundäre Amine sowie Mischungen von diesen als mögliche Reaktionspartner für die vorbezeichneten Isocyanate. Besonders häufig werden hierfür Polyole verwendet. Bei der Reaktion mit Polyolen bzw. Wasser entstehen Urethan- bzw. Harnstoffeinheiten, die aufgrund ihrer Fähigkeit zur Ausbildung von Wasserstoffbrückenbindungen teilkristalline Strukturen im ausgehärteten Schaum ausbilden können. Hierdurch wird die Härte der Schäume sowie deren Druck- und Reißfestigkeit erhöht.

Die Ausgangsstoffe werden häufig in Druckdosen eingefüllt und mit einem Treibmittel versehen, das das Aufschäumen der Präpolymere beim Ausbringen aus der Druckdose erleichtert. Zudem reagieren die Isocyanatgruppen des Präpolymers mit der Luftfeuchtigkeit, wobei Kohlendioxid abgespalten wird, welches ebenfalls zum Aufschäumen beiträgt. Bei dieser Reaktion werden die beteiligten Isocyanatgruppen zu Aminen umgewandelt, die ihrerseits mit weiteren Isocyanatgruppen unter Ausbildung eines polymeren Netzwerks reagieren können, mit anderen Worten also der Vernetzungsreaktion nicht verloren gehen.

Die Polyurethanzusammensetzungen können als 1K-Schäume oder auch als zweikomponentige (2K) Schäume hergestellt werden. Während die 1K-Schäume nur durch den Einfluss von Luftfeuchtigkeit aushärten, werden bei den 2K-Schäumen eine Isocyanat- und eine Polyol- oder eine wässrige Komponente getrennt voneinander aufbewahrt und erst unmittelbar vor dem Ausbringen miteinander vermischt. Der Mischvorgang geschieht hierbei beispielsweise in dem Druckkörper der Druckdose, deren Inhalt dann zügig vollständig aufgebraucht werden muss, da die Polymerisationsreaktion unabhängig davon stattfindet, ob der Schaum ausgebracht wird oder nicht. Solche Systeme werden daher häufig auch als 1,5K-Schäume bezeichnet.

Eine andere Möglichkeit besteht darin, eine Zweikammerdruckdose zu verwenden, in der die beiden Komponenten erst im Bereich des Auslassventils miteinander vermischt werden. Der Hauptvorteil der 2K-Schäume gegenüber den 1K-Schäumen besteht in der erheblich schnelleren Aushärtungsreaktion, da diese auch in Abwesenheit von Luftfeuchtigkeit stattfindet. Demgegenüber ist die Aushärtegeschwindigkeit bei 1K-Schäumen durch die Luftfeuchtigkeit bedingt sowie auch durch die Diffusionsgeschwindigkeit der Luftfeuchtigkeit in das ausgeschäumte Material.

Ein Nachteil all dieser Verfahren besteht in der Anwesenheit freier Isocyanatgruppen, die zur Aushärtung des Schaums verwendet werden. Für medizinische Anwendungen ist die Anwesenheit freier Isocyanatgruppen jedoch unerwünscht.

Aus den vorgenannten Gründen wurden in den letzten Jahren polymerisierbare schäumbare Zusammensetzungen entwickelt, welche nicht über freie Isocyanatgruppen aushärten. So sind beispielsweise aus der US 6,020,389 A1 Silikonschäume bekannt, welche Alkoxy-, Acyloxy- oder Oximo-terminierte Silikonpräpolymere enthalten. Diese Verbindungen polymerisieren über eine Kondensationsreaktion von Siloxangruppen. Nachteilig bei diesen Verbindungen ist ihre lange Aushärtezeit, da sie - wie auch die 1K-Polyurethan-Sprühschäume - auf Luftfeuchtigkeit für die Polymerisationsreaktion angewiesen sind. Insbesondere bei dickeren ausgeschäumten Schichten benötigt die vollständige Abreaktion entsprechend viel Zeit. Dies ist nicht nur unkomfortabel, sondern auch insofern problematisch, als dass die durch das Aussprühen gebildete Schaumstruktur zum Teil wieder zusammenfällt, bevor die Porenwände durch die fortschreitende Polymerisationsreaktion eine ausreichende Eigenfestigkeit aufbauen können.

Aus den Anmeldungen WO 00/04069 A, WO2009/007038 A, EP 946 629 A und EP 1 098 920 A sind alkoxysilanterminierte Polyurethanpräpolymere bekannt. Diese Präpolymere besitzen ein herkömmliches Polyurethanrückgrat, auch als "backbone" bezeichnet, welches auf an sich bekannte Weise durch Umsetzung von difunktionellen Isocyanaten mit Polyolen erhalten wird. Im Rahmen der WO 00/04069 A wird durch Einsatz eines Überschusses von polyfunktionellen Isocyanaten erreicht, dass die jeweiligen Endgruppen der Präpolymerketten freie Isocyanatgruppen besitzen. Diese Isocyanat-terminierten Präpolymere werden dann in einem weiteren Reaktionsschritt mit einem Aminoalkyltrialkoxysilan zu den gewünschten alkoxysilanterminierten Polyurethanpräpolymeren umgesetzt. Insbesondere wird hierzu Aminopropyltrimethoxysilan verwendet. Das hieraus erhaltene Präpolymer trägt trimethoxysilanterminierte Endgruppen, die über einen Propylenspacer an das Polyurethanrückgrat angekoppelt sind. Aufgrund der Propylengruppe zwischen dem Siliciumatom und dem Polyurethan-Backbone werden solche Silane auch als γ-Silane bezeichnet.

Bei der Aushärtungsreaktion reagieren die γ-Silane unter Einwirkung von Wasser unter Alkoholabspaltung und bilden hierbei Si-O-Si-Netzwerke aus, wodurch das Präpolymer aushärtet. Die γ-Silane weisen ebenso wie die Isocyanat-terminierten Polyurethan-Präpolymere den Nachteil auf, dass die Aushärtungsreaktion vergleichsweise langsam abläuft. Dieser Nachteil kann nur zum Teil dadurch kompensiert werden, dass γ-Silan-basierte Zusammensetzungen große Mengen an Vernetzungskatalysatoren zugesetzt werden, wie beispielsweise das auch für Polyurethan-Präpolymere verwendete Dibutylzinndilaurat. Dies wirkt sich jedoch zum Teil nachteilig auf die Lagerstabilität solcher Zusammensetzungen aus.

Da auch größere Mengen an Vernetzungskatalysator die Reaktionsträgheit der γ-Silane nicht vollständig kompensieren können, wurde nach reaktiveren Verbindungstypen geforscht. Solche sind beispielsweise aus der WO 02/066532 A1 bekannt. Auch bei den hier beschriebenen Präpolymeren handelt es sich um silanterminierte Polyurethan-Präpolymere. Der wesentliche Unterschied zu den zuvor beschriebenen γ-Silanen besteht darin, dass zwischen dem Polyurethan-Backbone und dem Siliciumatom anstelle der Propylen-Gruppe ein Methylen-Spacer eingesetzt ist. Aufgrund dessen werden diese Silane auch als α-Silane bezeichnet. Der kürzere Abstand des Siliciumatoms zu der stark polaren Harnstoffgruppe des Polyurethan-backbones erhöht die Reaktivität der an dem Siliciumatom befindlichen Alkoxygruppen (α-Effekt), so dass die Hydrolyse der Alkoxysilangruppen und die anschließende Kondensationsreaktion mit erheblich gesteigerter Geschwindigkeit abläuft. Sprühbare Schäume basierend auf α- oder γ-silanterminierten Präpolymeren, die unter anderem auch für Anwendungen im Bereich der Wundversorgung geeignet sind, sind auch in den noch nicht veröffentlichten europäischen Patentanmeldungen mit den Anmeldenummern 11183213.5, 11183214.3 und 11183212.7 beschrieben. Die silanterminierten Präpolymere werden mit einem speziellen Sprühsystem mit Hilfe von Treibgas und unter schnellem Vermischen mit einer wässrigen Komponente in einem Statikmischer zu schnell härtenden Schäumen ausgesprüht. Die in den zitierten Patentanmeldungen beschriebenen Schäume sind jedoch sehr weich, wenig druckfest und wenig dimensionsstabil.

Die WO2009/007018 beschreibt allgemein die Verwendung von silanterminierten Präpolymeren zur Herstellung von Wundauflagen. Die beschriebenen silanterminierten Präpolymere können auf einer Vielzahl von aus der Polyurethanlackchemie bekannten Poylolen basieren, wobei Polyetherpolyole bevorzugt sind. Unter anderem werden auch Polycarbonatpolyole als Ausgangskomponenten erwähnt, die durch Kondensation von Kohlensäurederivaten mit Polyolen erhältlich sind. Aus den so erhaltenen Polycarbonatpolyolen sind allerdings nur silanterminierte Präpolymere herstellbar, die bei Raumtemperatur fest und nicht ausreichend löslich in Treibgasen sind. Deshalb lassen sie sich nur sehr schlecht in sprühbare Formulierungen einarbeiten. Das Dokument DE 10 2009 057 597 A1 offenbart Alkoxyl-Endgruppen enthaltende Prepolymere und deren Verwendung als Klebstoffe oder Schäume (siehe Absatz [0001]). Das Beispiel 2 beschreibt die Herstellung eines Prepolymers aus einem Polycarbonatdiol und HDI, das anschließend mit dem N-(3-Trimethoxysilylpropyl)asparaginsäurediethylester umgesetzt wird. Die der vorliegenden Erfindung zu Grunde liegende Aufgabe bestand deshalb darin, ein alkoxysilanterminiertes Präpolymer zur Verfügung zu stellen, das sich durch eine gute Löslichkeit in unpolaren Treibmitteln auszeichnet und somit für die Herstellung von Sprühschäumen geeignet ist. Die erhaltenen Sprühschäume sollen dabei ausreichend schnell aushärten, eine poröse Struktur mit einem hohen Porenvolumen aufweisen, sowie generell gute mechanische Eigenschaften, insbesondere eine hohe Druckfestigkeit und Dimensionsstabilität besitzen. Ferner soll das Präpolymer beziehungsweise ein aus diesem Präpolymer erhältlicher Sprühschaum ein breiteres Anwendungsgebiet abdecken. Insbesondere soll das Mehrkomponentensystem für medizinische Anwendungen auf der Haut, wie beispielsweise geschäumte Wundauflagen eingesetzt werden können.

Diese Aufgabe wird erfindungsgemäß gelöst durch ein alkoxysilanterminiertes Präpolymer, dadurch gekennzeichnet, dass es durch Umsetzung von wenigstens A) einem Polyol, B) einer Verbindung mit mindestens zwei Isocyanatgruppen und C) einem Alkoxysilan, das wenigstens eine Isocyanatgruppe und/oder eine isocyanatreaktive Gruppe aufweist, herstellbar ist, wobei das Polyol A) wenigstens ein Polyethercarbonatpolyol, welches durch Anlagerung von Kohlendioxid und Alkylenoxiden an H-funktionelle Startersubstanzen erhältlich ist, umfasst.

Überraschenderweise hat sich herausgestellt, dass sich die erfindungsgemäßen alkoxysilanterminierten Präpolymere besonders gut zur Herstellung von Sprühschäumen eignen, welche ausreichend schnell aushärten, eine poröse Struktur mit einem hohen Porenvolumen aufweisen, sowie generell gute mechanische Eigenschaften, insbesondere eine hohe Druckfestigkeit und Dimensionsstabilität besitzen. Die erfindungsgemäßen alkoxysilanterminierten Präpolymere lassen sich einfach herstellen und lösen sich in hohem Maße in unpolaren Treibmitteln, wie Alkanen oder Alkenen und insbesondere in den technisch bedeutsamen Mischungen aus Propan und Butan. Dadurch ist es möglich, aus diesen Präpolymeren in Druckdosen abfüllbare 1K oder 2K Reaktivschaumzusammensetzungen zur Verfügung zu stellen. Diese lassen sich zu porösen Schäumen ausschäumen, wobei die 1K Schaumzusammensetzungen über die Einwirkung von Luftfeuchtigkeit aushärten können, während die 2K Schaumzusammensetzungen bevorzugt eine Härterkomponente - im einfachsten Fall ein protisches Lösungsmittel wie Wasser oder ein Alkohol - enthalten und auf diese Weise zur Polymerisation gebracht werden.

Solche 2K Schaumzusammensetzungen können in einer Zweikammer- bzw. Mehrkammerdruckdose abgefüllt und mit Hilfe von Treibgasen ausgeschäumt werden. In einer solchen Druckdose liegen die beiden Komponenten der erfindungsgemäßen Zusammensetzung bis unmittelbar vor dem Ausschäumen getrennt voneinander vor, so dass eine gute Lagerstabilität auch ohne den Zusatz von Wasserfängern oder anderer Stabilisatoren gewährleistet ist. Beim Ausbringen der 2K Zusammensetzung aus der Druckdose erfolgt deren Vermischung zweckmäßigerweise in der Nähe des Auslassventils. Die dabei entstehende Mischung aus erster und zweiter Komponente wird durch das weiterhin darin enthaltene Treibgas nach dem Verlassen der Druckdose unmittelbar aufgeschäumt.

Das zahlenmittlere Molekulargewicht Mₙ aller Polyole wird wie im Methodenteil beschrieben bestimmt.

Die **Komponente A)** umfasst erfindungsgemäß wenigstens ein **Polyethercarbonatpolyol,** welches durch Anlagerung von Kohlendioxid und Alkylenoxiden an H-funktionelle Startsubstanzen erhältlich ist. Unter "H-funktionell" wird im Sinne der Erfindung eine Starterverbindung verstanden, die gegenüber Alkoxylierung aktive H-Atomen aufweist.

In einer bevorzugten Ausführungsform der Erfindung weist das Polyethercarbonatpolyol einen Gehalt an Carbonatgruppen, berechnet als CO₂, ≥ 3 und ≤ 35 Gew.-%, bevorzugt ≥ 5 und ≤ 30 Gew.-% und besonders bevorzugt ≥ 10 und ≤ 28 Gew.-% auf. Die Bestimmung erfolgt mittels NMR gemäß der im Methodenteil genannten Analysenmethode.

In einer weiteren bevorzugten Ausführungsform der Erfindung hat das Polyethercarbonatpolyol ein zahlenmittleres Molekulargewicht Mₙ von ≥ 500 und ≤ 6000 g/mol, bevorzugt ≥ 1000 und ≤ 5000 g/mol, und besonders bevorzugt ≥ 1000 und ≤ 3000 g/mol. Die Bestimmung der Molekulargewichte erfolgt mittels Titration der OH-Endgruppen gemäß der im Methodenteil genannten Analysenmethode.

Vorzugsweise weist das Polyethercarbonatpolyol ≥ 2 und ≤ 4, bevorzugt ≥ 2 und ≤ 3 und besonders bevorzugt 2 OH-Gruppen auf.

Allgemein können zur Herstellung der Polyethercarbonatpolyole **Alkylenoxide** (Epoxide) mit 2 bis 24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat. Vorzugsweise werden als Alkylenoxide Ethylenoxid und/oder Propylenoxid, insbesondere Propylenoxid eingesetzt.

In einer besonders bevorzugten Ausführungsform der Erfindung liegt der Anteil an Ethylenoxid an der gesamt eingesetzten Menge der Alkylenoxide ≥ 0 und ≤ 90 Gew.-%, bevorzugt ≥ 0 und ≤ 50 Gew.-% und besonders bevorzugt zwischen > 0 und ≤ 25 Gew.-%.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine^{®} von Huntsman), Polytetrahydrofurane (z. B. PolyTHF^{®} der BASF, wie z. B. PolyTHF^{®} 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens zwei OH-Gruppen pro Molekül enthalten, eingesetzt. Beispielhaft handelt es sich bei den C₁-C₂₄ Alkyl-Fettsäureester, die im Mittel mindestens zwei OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.). Als H-funktionelle Startersubstanzen geeignete mehrwertige Alkohole sind beispielsweise zweiwertige Alkohole, wie z.B. Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie z.B. 3-Methyl-1,5-pentandiol), 1,6-Hexandiol; 1,8-Octandiol, 1,10-Decandiol, 1,12-Dodecandiol, Bis-(hydroxymethyl)-cyclohexane (wie z. B. 1,4-Bis-(hydroxymethyl)cyclohexan), Triethylenglykol, Tetraethylenglykol, Polyethylenglykol, Dipropylenglykol, Tripropylenglykol, Polypropylenglykol, Dibutylenglykol und Polybutylenglykole; dreiwertige Alkohole, wie beispielsweise Trimethylolpropan, Glycerin, Trishydroxyethylisocyanurat und Rizinusöl; vierwertige Alkohole, wie beispielsweise Pentaerythrit; Polyalkohole, wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl, sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem zahlenmittleren Molekulargewicht Mₙ im Bereich von 200 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Acclaim^{®}-, Arcol^{®}-, Baycoll^{®}-, Bayfill^{®}-, Bayflex^{®}- Baygal^{®}-, PET^{®}- und Polyether-Polyole der Bayer MaterialScience AG (wie z. B. Desmophen^{®} 3600Z, Desmophen^{®} 1900U, Acclaim^{®} Polyol 2200, Acclaim^{®} Polyol 40001, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionelle Startersubstanzen können auch aus der Substanzklasse der Polyesterpolyole ausgewählt sein, insbesondere solchen mit einem zahlenmittleren Molekulargewicht Mₙ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. 1,2-Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mₙ von 150 bis 2000 g/mol bevorzugt.

Des Weiteren können als H-funktionelle Startersubstanzen Polycarbonatpolyole, wie beispielsweise Polycarbonatdiole, eingesetzt werden, insbesondere solchen mit einem zahlenmittleren Molekulargewicht Mₙ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP 1359177 A. Beispielsweise können als Polycarbonatdiole die Desmophen^{®} C-Typen der Bayer MaterialScience AG verwendet werden, wie z. B. Desmophen^{®} C 1100 oder Desmophen^{®} C 2200.

Ebenfalls können Polyethercarbonatpolyole als H-funktionelle Startersubstanzen eingesetzt werden. Insbesondere werden Polyethercarbonatpolyole, die nach dem hier beschriebenen Verfahren hergestellt werden eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (I),

HO-(CH₂)x-OH (I)

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10-Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (I) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mₙ im Bereich von 62 bis 4500 g/mol und insbesondere ein zahlenmittleres Molekulargewicht Mₙ im Bereich von 62 bis 3000 g/mol, ganz besonders bevorzugt ein Molekulargewicht von 62 bis 1500 g/mol. Bevorzugt haben die Polyetherpolyole eine Funktionalität von 2 bis 3, bevorzugt von 2.

In einer bevorzugten Ausführungsform der Erfindung ist das Polyethercarbonatpolyol durch Anlagerung von Kohlendioxid und Alkylenoxiden an H-funktionelle Startsubstanzen unter Verwendung von Multimetallcyanid-Katalysatoren (DMC-Katalysatoren) erhältlich. Die Herstellung von Polyethercarbonatpolyolen durch Anlagerung von Alkylenoxiden und CO₂ an H-funktionelle Starter unter Verwendung von DMC-Katalysatoren ist beispielsweise aus der EP 0222453 A, WO 2008/013731 A und EP 2115032 A bekannt.

**DMC-Katalysatoren** sind im Prinzip aus dem Stand der Technik zur Homopolymerisation von Epoxiden bekannt (siehe z.B. US 3 404 109 A, US 3 829 505 A, US 3 941 849 A und US 5 158 922 A). DMC-Katalysatoren, die z.B. in US 5 470 813 A, EP 700 949 A, EP 743 093 A, EP 761 708 A, WO 97/40086 A, WO 98/16310 A und WO 00/47649 A beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht Mₙ größer als 500 g/mol enthalten.
Der DMC-Katalysator wird zumeist in einer Menge ≤ 1 Gew.-%, vorzugsweise in einer Menge ≤ 0,5 Gew.-%, besonders bevorzugt in einer Menge von ≥ 0 ppm und ≤ 500 ppm und insbesondere in einer Menge von ≥ 0 ppm und ≤ 300 ppm, jeweils bezogen auf das Gewicht des Polyethercarbonatpolyols eingesetzt.

Die Herstellung der Polyethercarbonatpolyole erfolgt bevorzugt in einem Druckreaktor. Die Dosierung eines oder mehrerer Alkylenoxide und des Kohlendioxids erfolgt nach der optionalen Trocknung einer Startersubstanz oder der Mischung mehrerer Startersubstanzen und der Zugabe des DMC-Katalysators sowie das/der Additiv(e), die vor oder nach der Trocknung als Feststoff oder in Form einer Suspension zugegeben werden. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases, wie beispielsweise Stickstoff, eingestellt, wobei der Druck ≥ 10 mbar und ≤ 5 bar, vorzugsweise ≥ 100 mbar und ≤ 3 bar und bevorzugt ≥ 500 mbar und ≤ 2 bar eingestellt wird.
Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Die Dosierung ein oder mehrerer Alkylenoxide kann simultan oder sequentiell zur Kohlendioxid Dosierung erfolgen. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren.
Vorzugsweise wird ein Überschuss an Kohlendioxid eingesetzt, insbesondere wird die Menge an Kohlendioxid über den Gesamtdruck bei Reaktionsbedingungen bestimmt. Bedingt durch die Reaktionsträgheit von Kohlendioxid ist ein Überschuss von Kohlendioxid von Vorteil. Es hat sich gezeigt, dass die Reaktion bei 60 bis 150 °C, bevorzugt bei 70 bis 140 °C, besonders bevorzugt bei 80 bis 130 °C und Drücken von 0 bis 100 bar, bevorzugt 1 bis 90 bar und besonders bevorzugt von 3 bis 80 bar die Polyethercarbonatpolyole erzeugt. Bei Temperaturen unterhalb von 60 °C kommt die Reaktion zum Erliegen. Bei Temperaturen oberhalb von 150 °C steigt die Menge an unerwünschten Nebenprodukten stark an.

Der Anteil des Polyethercarbonatpolyols an der Komponente A) beträgt bevorzugt ≥ 50 und ≤ 100 Gew.-%, besonders bevorzugt ≥ 60 und ≤ 100 Gew.-% und ganz besonders bevorzugt ≥ 70 und ≤ 95 Gew.-%.

**Die Komponente A)** kann neben den oben genannten Polyetherpolycarbonatpolyolen die in der Polyurethanchemie bekannten Polyester- oder Polyetherpolyole enthalten.

Die in Frage kommenden, Hydroxylgruppen aufweisenden Polyester sind beispielsweise Umsetzungsprodukte von mehrwertigen, vorzugsweise zweiwertigen Alkoholen mit mehrwertigen, vorzugsweise zweiwertigen Polycarbonsäuren. Anstelle der freien Carbonsäuren können auch die entsprechenden Polycarbonsäureanhydride oder entsprechende Polycarbonsäureester von niedrigen Alkoholen oder deren Gemische zur Herstellung der Polyester verwendet werden.

Die Polycarbonsäuren können aliphatischer, cycloaliphatischer, aromatischer und/oder heterocyclischer Natur sein und gegebenenfalls, z. B. durch Halogenatome, substituiert sein und/oder ungesättigt sein. Bevorzugt sind aliphatische und cycloaliphatische Dicarbonsäuren. Als Beispiele hierfür seien genannt:Bernsteinsäure, Adipinsäure, Azelainsäure, Sebacinsäure, Phthalsäure, Tetrachlorphthalsäure, Isophtalsäure, Terephthalsäure, Tetrahydrophthalsäure, Hexahydrophthalsäure, Cyclohexandicarbonsäure, Itaconsäure, Sebacinsäure, Glutarsäure, Korksäure, 2-Methylbernsteinsäure, 3,3-Diethylglutarsäure, 2,2-Dimethylbernsteinsäure, Maleinsäure, Malonsäure, Fumarsäure oder Terephthalsäuredimethylester. Anhydride dieser Säuren sind ebenfalls brauchbar, soweit sie existieren. Beispiele hierfür sind Maleinsäureanhydrid, Phthalsäureanhydrid, Tetrahydrophthalsäureanhydrid, Glutarsäureanhydrid, Hexahydrophthalsäureanhydrid und Tetrachlorphthalsäureanhydrid.

Als gegebenenfalls in kleinen Mengen mitzuverwendende Polycarbonsäure sei hier Trimellitsäure genannt.

Als mehrwertige Alkohole kommen vorzugsweise Diole zur Anwendung. Beispiele solcher Diole sind z. B. Ethylenglykol, Propylenglykol-1,2, Propylenglykol-1,3, Butandiol-1,4, Butandiol-2,3, Diethylenglykol, Triethylenglykol, Hexandiol-1,6, Octandiol-1,8, Neopentylglykol, 2-Methyl-1,3-propandiol oder Hydroxypivalinsäureneopentylglykolester in Frage. Auch Polyesterdiole aus Lactonen, z. B. ε-Caprolacton, sind einsetzbar. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Die in Frage kommenden, Hydroxylgruppen aufweisenden Polyether sind solche, die durch Polymerisation von cyclischen Ethern wie Ethylenoxid, Propylenoxid, Butylenoxid, Tetrahydrofuran, Styroloxid oder Epichlorhydrin mit sich selbst, z. B. in Gegenwart von BF₃ oder basischen Katalysatoren, oder durch Anlagerung dieser Ringverbindungen, gegebenenfalls im Gemisch oder nacheinander, an H-funktionelle Startkomponenten. Als H-funktionelle Starterkomponenten kommen hierbei auch die oben für die Polyethercarbonatpolyole beschriebenen Verbindungen in Frage. Bevorzugte hydroxylgruppenhaltige Polyether sind solche auf Basis von Ethylenoxid, Propylenoxid oder Tetrahydrofuran oder Mischungen dieser cyclischen Ether.

In einer bevorzugten Ausführungsform der Erfindung werden neben den oben genannten Polyethercarbonatpolyolen Polyetherpolyole eingesetzt, deren Anteil an Ethylenoxideinheiten ≤ 30 Gew.-% und weiter bevorzugt ≤ 20 Gew.-%, bezogen auf das Polyetherpolyol, beträgt. In besonders bevorzugter Weise beträgt der Anteil an Ethylenoxideinheiten ≥ 3 und ≤ 30 Gew.-%, insbesondere > 5 und ≤ 20 Gew.-%, jeweils bezogen auf das Polyetherpolyol. Die übrigen Alkylenoxideinheiten können weitestgehend Propylenoxideinheiten sein, es können aber auch andere Struktureinheiten vorhanden sein. Ungeachtet dessen können auch Polyether ohne Ethylenoxideinheiten verwendet werden.

Zur Herstellung der erfindungsgemäßen alkoxysilanterminierten Präpolymere sind als **Komponente B)** grundsätzlich alle dem Fachmann an sich bekannten aromatischen, araliphatischen, aliphatischen oder cycloaliphatischen Verbindungen mit mindestens zwei Isocyanatgruppen geeignet. Beispiele derartiger Polyisocyanate sind 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,2'-und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoat (Lysindiisocyanate) mit C1-C8-Alkylgruppen, sowie 4-Isocyanatomethyl-1,8-octandiisocyanat (Nonantriisocyanat) und Triphenylmethan-4,4',4"-triisocyanat. Es können auch beliebige Gemische der genannten Verbindungen eingesetzt werden.

Neben den vorstehend genannten Verbindungen können anteilig auch modifizierte Diisocyanate oder Triisocyanate mit Uretdion-, Isocyanurat-, Urethan-, Allophanat-, Biuret-, Iminooxadiazindion- und/oder Oxadiazintrionstruktur mit eingesetzt werden.

Bevorzugt handelt es sich bei der Komponente B) um aliphatische und/oder cycloaliphatische Verbindungen mit mindestens zwei Isocyanatgruppen, besonders bevorzugt um aliphatische Verbindungen mit mindestens zwei Isocyanatgruppen.

Die mittlere Isocyanat-Funktionalität der Komponente B) liegt bevorzugte bei 2 bis 4, besonders bevorzugt bei 2 bis 2,6 und ganz besonders bevorzugt bei 2.

Die **Komponente C)** umfasst erfindungsgemäß wenigstens ein Alkoxysilan, das wenigstens eine Isocyanatgruppe und/oder isocyanatreaktive Gruppe aufweist. Unter isocyanatreaktiven Gruppen werden funktionelle Gruppen verstanden, die unter Wasserstoffabspaltung mit Isocyanatgruppen reagieren können. Bevorzugt handelt es sich bei den isocyanatreaktiven Gruppen um OH-, SH- und / oder Aminogruppen.

Geeignete isocyanatreaktive Gruppen aufweisende Alkoxysilane sind dem Fachmann hinlänglich bekannt, beispielhaft genannt seien Aminopropyltrimethoxysilan, Mercaptopropyltrimethoxysilan, Aminopropylmethyldimethoxysilan, Mercaptopropylmethyldimethoxysilan, Aminopropyltriethoxysilan, Mercaptopropyltriethoxysilan, Aminopropylmethyldiethoxysilan, Mercaptopropylmethyldiethoxysilan, Aminomethyltrimethoxysilan, Aminomethyltriethoxysilan, (Aminomethyl)methyldimethoxysilan, (Aminomethyl)methyl-diethoxysilan, *N-*Butyl-aminopropyltrimethoxysilan, *N-*Ethyl-aminopropyltrimethoxysilan, *N-*Phenyl-aminopropyltrimethoxysilan, *N-*(3-Triethoxysilylpropyl)asparaginsäurediethylester, *N-*(*3*-Trimethoxysilylpropyl)asparaginsäurediethylester und *N*-(3-Dimethoxymethylsilylpropyl)-asparaginsäurediethylester, (N-Cyclohexylaminomethyl)methyldiethoxysilan, (N-Cyclohexylaminomethyl)triethoxysilan, (N-Phenylaminomethyl)methyldimethoxysilan und (N-Phenylaminomethyl)trimethoxysilan. Bevorzugt ist die Verwendung von (N-Cyclohexylaminomethyl)methyldiethoxysilan, (N-Cyclohexylaminomethyl)triethoxysilan, (N-Phenylaminomethyl)methyldimethoxysilan und / oder (N-Phenylaminomethyl)trimethoxysilan und ganz besonders bevorzugt ist die Verwendung von (N-Cyclohexylaminomethyl)methyldiethoxysilan und/oder (N-Cyclohexylaminomethyl)triethoxysilan.

Geeignete Isocyanatgruppen aufweisende Alkoxysilane sind ebenfalls grundsätzlich bekannt. Als Beispiele genannt seien Isocyanatomethyltrimethoxysilan, Isocyanatomethyltriethoxysilan, (Isocyanatomethyl)methyldimethoxysilan, (Isocyanatomethyl)methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan. Bevorzugt ist die Verwendung von 3-Isocyanatopropyltrimethoxysilan und 3-Isocyanatpropyltriethoxysilan.

Bevorzugt ist die Verwendung von Di- oder Trialkoxysilanen, besonders bevorzugt von Trialkoxysilanen, ganz besonders bevorzugt von Triethoxy- und/oder Trimethoxysilanen.

In einer bevorzugten Ausführungsform der Erfindung ist das Alkoxysilan der Komponente C) ein α-Alkoxysilan.

Unter einer α-Silangruppe versteht man, wie bereits vorgehend ausgeführt wurde, dass zwischen dem Siliciumatom und der isocyanatreaktiven Gruppe oder der Isocyanatgruppe ein Methylen-Spacer vorhanden ist. Solche Silane zeichnen sich durch eine besondere Reaktionsfreudigkeit in Bezug auf die Kondensationsreaktion aus. Aufgrund dessen ist es im Rahmen der vorliegenden Erfindung möglich, vollständig auf den Einsatz Schwermetall-basierter Vernetzungskatalysatoren wie organische Titanate oder organische Zinn(IV)Verbindungen zu verzichten. Dies ist insbesondere bei medizinischen Anwendungsfeldern für die erfindungsgemäße Zusammensetzung von Vorteil.

Gemäß einer bevorzugten Ausführungsform der Erfindung ist vorgesehen, dass das alkoxysilanterminierte Präpolymer durch Umsetzung von wenigstens dem isocyanatreaktive Gruppen aufweisenden Alkoxysilan C) mit einem NCO-terminierten Polyurethanpräpolymer herstellbar ist, wobei das NCO-terminierte Polyurethanpräpolymer durch Umsetzung von wenigstens der isocyanatfunktionellen Verbindung B) mit dem Polyol A) herstellbar ist. Dabei kann die mittlere NCO-Funktionalität des NCO-terminierten Polyurethanpräpolymers bevorzugt ≤ 4 und insbesondere ≥ 2 und ≤ 4 sein.

Ein alkoxysilanterminiertes Präpolymer der vorgenannten Art ist insbesondere für medizinische Anwendungen vorteilhaft, weil es eine ausreichend niedrige Viskosität aufweist, so dass es sich leicht ausschäumen lässt.

In einer weiteren, jedoch weniger bevorzugten Ausführungsform der Erfindung, ist das alkoxysilanterminierte Präpolymer auch durch Umsetzung von wenigstens dem Isocyanatgruppen aufweisenden Alkoxysilan C) mit einem OH-terminierten Präpolymer herstellbar, wobei das OH-terminierte Polyurethanpräpolymer durch Umsetzung von wenigstens der Verbindung B) mit dem Polyol A) herstellbar ist. In diesem Fall weisen die alkoxysilanterminierten Präpolymere jedoch eine höhere Viskosität im Vergleich zu den durch Umsetzung von isocyanatfunktionellen Präpolymeren und isocyanatreaktiven Alkoxysilanen hergestellten auf, und sind daher für Sprühschaumanwendungen schlechter geeignet.

Die vorliegende Erfindung betrifft ferner ein Verfahren zur Herstellung eines erfindungsgemäßen alkoxysilanterminierten Präpolymers umfassend die folgenden Schritte:
- Umsetzung des Polyols A) mit der Verbindung B) zu einem isocyanat- oder OH-terminierten Polyurethanpräpolymer, bevorzugt einem NCO-terminierten Präpolymer und
- Umsetzung des isocyanat- oder OH-terminierten Polyurethanpräpolymers, bevorzugt des isocyanatterminierten Präpolymers, mit dem Alkoxysilan C) zum alkoxysilanterminierten Präpolymer.

Die Umsetzung des Polyols A) mit der isocyanatfunktionellen Verbindung B) erfolgt bevorzugt bei Temperaturen von 60 °C bis 150 °C, besonders bevorzugt bei Temperaturen von 70 °C bis 130 °C. Die Zugabe eines inerten Lösungsmittels ist möglich, aber nicht bevorzugt, da dieses Lösungsmittel nachträglich durch Destillation wieder abgetrennt werden müsste. Vorzugsweise werden die Komponenten bei leicht erhöhter Temperatur vorgemischt, wobei es grundsätzlich beliebig ist, ob die Komponente A) zur Komponente B) zugegeben werden oder umgekehrt. Häufig bestimmt die Viskosität des verwendeten Polyols A), ob B) zu A) zugegeben wird oder umgekehrt. Die Verwendung eines Katalysators ist möglich, aber nicht bevorzugt. Bevorzugt ist die Umsetzung ohne Katalysator, um zu Endprodukten ohne toxisches Potential zu gelangen. Geeignete Katalysatoren sind die dem Fachmann aus der Polyurethanchemie allgemein bekannten Katalysatoren.

Das molare Verhältnis zwischen Polyol A) und isocyanatfunktioneller Verbindung B) ist grundsätzlich in weiten Bereichen variierbar. Bevorzugt wird ein silanterminiertes Präpolymer mit niedrigem Molgewicht und niedriger Viskosität angestrebt, so dass die Verwendung eines deutlichen Überschusses an Isocyanatgruppen bezogen auf die eingesetzten OH-Gruppen bevorzugt ist. Üblicherweise verwendet man einen 5-20 fachen Überschuss von Isocyanatgruppen, bezogen auf die eingesetzten OH-Gruppen.

Das Reaktionsgemisch wird bevorzugt solange bei Reaktionstemperatur gerührt, bis der theoretisch berechnete NCO-Wert erreicht oder leicht unterschritten ist.

In einer weiteren bevorzugten Ausführungsform der Erfindung wird anschließend das NCO-terminierte Präpolymer von nicht umgesetzten Anteilen der monomeren isocyanatfunktionellen Verbindung B) gereinigt. Nach der Reinigung liegt der Anteil an nicht umgesetzten monomeren isocyanatfunktionellen Verbindungen B) bei ≤ 0,5 Gew.-%. Dies kann durch verschiedene, dem Fachmann an sich bekannte Möglichkeiten erreicht werden. Erfindungsgemäß besonders geeignet ist eine destillative Aufreinigung der Präpolymere bei vermindertem Druck, insbesondere über eine Dünnschichtdestillation. Diese Reinigungsprozedur ist besonders vorteilhaft, weil sich herausgestellt hat, dass sich Zusammensetzungen, deren Präpolymere über eine Dünnschichtdestillation von Polyisocyanaten befreit wurden, besser ausschäumen lassen, da sich die Viskositäten der Zusammensetzungen einfacher einstellen lassen und insgesamt weniger viskose Präpolymere erhalten werden. Die genauen Werte für Temperatur und vermindertem Druck sind von der eingesetzten monomeren isocyanatfunktionellen Verbindung B) abhängig.

Zur Herstellung des silanterminierten Präpolymers wird vorzugsweise das isocyanat- oder OH-terminierte Präpolymer vorgelegt und mit einem Alkoxysilan umgesetzt, welches Isocyanatgruppen und/oder isocyanatreaktive Gruppen enthält. Das Alkoxysilan wird bevorzugt bei 25 °C bis 70 °C, besonders bevorzugt bei 30 bis 50 °C zugegeben. Es wird vorzugsweise so viel Alkoxysilan eingesetzt, dass das Verhältnis von Isocyanatgruppen zu isocyanatreaktiven Gruppen oder von OH-Gruppen zu Isocyanatgruppen 1:1 beträgt. Nach Zugabe wird das Reaktionsgemisch bevorzugt so lange bei Temperaturen zwischen 30 und 70 °C, besonders bevorzugt bei 30 bis 50 °C gerührt, bis keine freien Isocyanatgruppen mehr nachweisbar sind. Üblicherweise wird die Bestimmung der freien Isocyanatgruppen durch IR-Spektroskopie durchgeführt. Die Isocyanatruppe besitzt im IR-Spektrum eine sehr charakteristische Bande bei ca. 2260 cm⁻¹, so dass das Fehlen der Isocyanatgruppen sehr leicht nachweisbar ist. Sollte die Isocyanatgruppe mit der berechneten Menge an Alkoxysilan nicht vollständig umgesetzt werden, können noch entsprechende Mengen an Alkoxysilan nachgesetzt werden, um die Reaktion zu vervollständigen.

Das nach dem bevorzugten Verfahren erhaltene alkoxysilanterminierte Präpolymer enthält somit keine mittels IR oder Titration nachweisbaren freien Isocyanatgruppen mehr und kann damit als isocyanatfrei bezeichnet werden.

Ein weiterer Gegenstand der Erfindung ist eine Zusammensetzung, dadurch gekennzeichnet, dass diese wenigstens ein erfindungsgemäßes alkoxysilanterminiertes Präpolymer i) und mindestens eine weitere Komponente umfasst.

In einer bevorzugten Ausführungsform der erfindungsgemäßen Zusammensetzung enthält diese als weitere Komponente ≥ 1 und ≤ 70 Gew.-%, bevorzugt ≥ 1 und ≤ 30 Gew.-% und besonders bevorzugt ≥ 5 und ≤ 20 Gew.-% eines von i) verschiedenen alkoxysilanterminierten Präpolymers, welches als Polyol Komponente a) ein Polyetherpolyol und/oder Polyesterpolyol mit einem zahlenmittleren Molekulargewicht Mₙ von ≥ 500 und ≤ 7000 g/mol enthält. Es gelten ebenfalls die im Rahmen der Komponente A) dargelegten bevorzugten allgemeinen Ausführungsformen der Polyether und Polyesterpolyole.

Besonders bevorzugt weist das Polyetherpolyol der Komponente a) Ethylen- und/oder Propylenoxideinheiten auf und der Anteil an Ethylenoxideiheiten liegt bei ≤ 50 Gew.-%, bevorzugt bei 10 bis 30 Gew.-% bezogen auf das Polyetherpolyol.

Die erfindungsgemäße Zusammensetzung ist vorzugsweise frei von monomeren Isocyanatverbindungen, wobei darunter vorliegend ein System verstanden wird, das weniger als 0,5 Gew.-% monomere Isocyanatverbindungen enthält.

In einer bevorzugten Ausführungsform der erfindungsgemäßen Zusammensetzung enthält diese des Weiteren alkoxysilanterminierte Polyisocyanate. Diese können durch Umsetzung von Diisocyanaten, modifizierten Diisocyanate oder Triisocyanate mit Uretdion-, Isocyanurat-, Urethan-, Allophanat-, Biuret-, Iminooxadiazindion- und/oder Oxadiazintrionstruktur oder Gemischen der vorgenannten Verbindungen mit Alkoxysilanen, die mindestens eine isocyanatreaktive Gruppe aufweisen, erhalten werden. Bevorzugt werden Triisocyanate mit Isocyanurat- (beispielsweise Desmodur N 3300 von Bayer Material Science AG), Iminooxadiazindion- (beispielsweise Desmodur N 3900 von Bayer Material Science AG) und/oder mit Allophanatstrukturen (beispielsweise Desmodur XP 2580 von Bayer Material Science AG) eingesetzt. Als Alkoxysilanen, die mindestens eine isocyanatreaktive Gruppe aufweisen, sind ebenfalls die schon zuvor genannten Verbindungen geeignet. Der Anteil der alkoxysilanterminierte Polyisocyanate an der Zusammensetzung beträgt bevorzugt ≥ 0 und ≤ 60 Gew.-%, besonders bevorzugt ≥ 1 und ≤ 30 Gew.-%, und ganz besonders bevorzugt ≥ 5 und ≤ 15 Gew.-%.

Die erfindungsgemäße Zusammensetzung kann zudem als Komponenten medizinische und/ oder kosmetische Wirkstoffe, Treibgase und/oder Hilfsmittel enthalten. Es gelten die für diese Komponenten im weiteren Verlauf des Textes angeführten bevorzugten Ausführungsformen.

Das erfindungsgemäße silanterminierte Präpolymer oder die erfindungsgemäße Zusammensetzung kann ohne weitere Hilfsmittel auf eine Oberfläche appliziert werden und durch den Wassergehalt in der Atmosphäre oder durch den Wassergehalt auf der Oberfläche gehärtet werden. Somit kann das STP für eine einkomponentige (1K) Schaumapplikation genutzt werden.

Das erfindungsgemäße silanterminierte Präpolymer oder die erfindungsgemäße Zusammensetzung ist jedoch besonders für die Schaumapplikation aus einer Druckdose geeignet. Deshalb enthält die Zusammensetzung in bevorzugter Weise ein unter Druck verflüssigtes Treibgas. Das Treibgas kann bevorzugt wenigstens ein Alkan oder ein Alken mit jeweils 1 bis 5 Kohlenstoffatomen und insbesondere wenigstens eine Verbindung aus der Gruppe Ethan, Propan, n-Butan, iso-Butan, Pentan sowie Mischungen von diesen umfassen. Es kommen zwar prinzipiell auch andere Treibgase in Frage, wie beispielsweise Dimethylether, jedoch rekrutieren sich die verwendeten Treibgase in besonders bevorzugter Weise aus den vorgenannten Alkanen beziehungsweise Alkenen.

Die Zusammensetzung kann beispielsweise bei einem Druck von 1,5 bar und bei einer Temperatur von 20°C wenigstens 3 Gew.-% an Treibgasen bezogen auf die Zusammensetzung enthalten wobei das Treibgas vollständig in der Zusammensetzung gelöst ist. Die vollständige Löslichkeit kann bei 20°C in "Schaugläsern zur optischen Prüfung von Aerosolen" der Firma Pamasol Willi Mäder AG, CH ermittelt werden. Die vollständige Löslichkeit im Sinne der vorliegenden Erfindung ist dann gegeben, wenn das Treibgas dauerhaft (> 1h) keine optisch wahrnehmbare zweite Phase ausbildet.

Nach einer besonders bevorzugten Ausführungsform beträgt der Gehalt an gelöstem Treibgas 10 bis 30 Gew.-% bezogen auf die gesamte Zusammensetzung, bevorzugt 15 bis 30 Gew.-%.

Durch die Zugabe eines silanterminierten Präpolymers auf Basis eines wie oben definierten Polyetherdiols zum erfindungsgemäßen silanterminierten Präpolymer auf Basis von Polyethercarbonatpolyolen wird die schäumbare Mischung besser mit Wasser benetzbar. Dadurch erfolgt die Hydrolyse der Alkoxysilangruppen schneller und die ausgesprühten Schäume härten schneller aus.

Bevorzugt ist jedoch ein zwei- oder mehrkomponentiges System basierend auf dem erfindungsgemäßen silanterminierten Präpolymer oder der erfindungsgemäßen Zusammensetzung.

Ein weiterer Gegenstand der Erfindung ist ein Mehrkomponentensystem, umfassend wenigstens zwei getrennte Komponenten, wobei die erste Komponente I) ein erfindungsgemäßes alkoxysilanterminiertes Präpolymer oder eine erfindungsgemäße Zusammensetzung umfasst und die zweite Komponente II) eine protische Verbindung, bevorzugt mindestens ein protisches Lösungsmittel oder ein Gemisch von protischen Lösungsmitteln umfasst.

Auch das erfindungsgemäße Mehrkomponentensystem ist vorzugsweise frei von monomeren Isocyanatverbindungen, wobei darunter vorliegend ein System verstanden wird, das weniger als 0,5 Gew.-% monomere Isocyanatverbindungen enthält.

Die Komponente II) kann im einfachsten Fall Wasser enthalten, oder sogar aus Wasser bestehen. Zweckmäßigerweise enthält die Komponente II) jedoch weitere Bestandteile.

Neben Wasser können zusätzlich auch noch wassermischbare Lösungsmittel in der Komponente II) enthalten sein. Aufgrund des bevorzugten Einsatzes im medizinischen Bereich mit Hautkontakt sind solche Materialien bevorzugt, von denen keinerlei toxischen Nebenwirkungen zu erwarten sind.

Des Weiteren können auch niedermolekulare Polyole, die bevorzugt eine Molmasse von ≥ 62 und ≤ 500 g/mol aufweisen in der Komponente II) enthalten sein. Bevorzugt sind die niedermolekularen Polyole dabei ausgewählt aus der Gruppe Ethylenglykol, Glycerin und/oder Sorbitol, besonders bevorzugt ist Glycerin. Die Polyole können bevorzugt einen Anteil von 0,1 bis 80 Gew.-%, besonders bevorzugt von 20 bis 75 Gew.-% und ganz besonders bevorzugt von 40 bis 70 Gew.-% an der Komponete II) haben.

Des Weiteren ist es insbesondere vorteilhaft, wenn die Komponente II) einen pH-Wert von ≥ pH 3,0 und ≤ 9,0 aufweist. Denn es hat sich überraschenderweise herausgestellt, dass sich ein alkoxysilanterminiertes Präpolymer mittels einer wässrigen Komponente bei den vorgenannten pH-Werten in kürzester Zeit aushärten lässt, so dass eine solche Zusammensetzung in einer Zweikammer- bzw. Mehrkammerdruckdose abgefüllt und mit Hilfe von Treibgasen zu stabilen und feinporigen Schäumen aufgeschäumt werden kann. Aufgrund des gemäßigten pH-Bereichs der wässrigen Komponente von ≥ pH 3,0 und ≤ 9,0 kann die erfindungsgemäße Zusammensetzung auch beispielsweise unmittelbar auf die humane oder tierische Haut aufgebracht werden.

Zur weiteren Verbesserung der Hautverträglichkeit kann die wässrige Komponente vorzugsweise einen pH-Wert von ≥ 3,5 und ≤ 8,0, insbesondere > 4,0 und ≤ 6,5 aufweisen. In diesem pH-Bereich treten praktisch keinerlei Hautirritationen selbst bei empfindlicher Haut auf. Gleichzeitig härten die Zusammensetzungen nach dem Vermischen von Komponente I) und Komponente II) mit der vorgenannten hohen Geschwindigkeit aus.

Die vorgenannten pH-Bereiche lassen sich im Prinzip auf jede erdenkliche Weise einstellen. So kann die Komponente II) wenigstens eine Säure, eine Base oder ein Puffersystem enthalten, wobei der Zusatz eines Puffersystems bevorzugt ist. So zeigt beispielsweise der Vergleich zweier Mehrkomponentensysteme, von denen die eine in der Komponente II) eine Säure und die andere in der Komponente II) ein Puffersystem bei gleichem pH-Wert umfasst, dass bei dem Mehrkomponentensystem mit dem Puffersystem die Aushärtung des silanterminierten Präpolymers positiv beeinflusst wird, so dass insbesondere feinporigere Schäume ausgebildet werden.

Als Säuren kommen organische und anorganische Verbindungen in Betracht, welche zumindest zum Teil wasserlöslich sind und dabei den pH-Wert ins Saure verschieben. Dies sind beispielsweise Mineralsäuren wie Phosphorsäure. Als organische Säuren können beispielsweise Ameisensäure, Essigsäure, verschiedene α-Chloressigsäuren, Milchsäure, Äpfelsäure, Zitronensäure, Weinsäure, Bernsteinsäure und dergleichen verwendet werden. Auch Mischungen der vorgenannten Stoffe können verwendet werden.

Erfindungsgemäß verwendbare Basen können ebenfalls organischen und anorganischen Ursprungs und zumindest zum Teil wasserlöslich sein und dabei den pH-Wert ins Basische verschieben. Dies sind beispielsweise die Alkali- oder Erdalkalihydroxide wie Natrium- oder Kaliumhydroxid, Ammoniak um nur einige zu nennen. Als organische Basen kommen beispielsweise Stickstoff-enthaltende Verbindungen in Frage wie primäre, sekundäre, tertiäre aliphatische oder cycloaliphatische Amine sowie aromatische Amine. Zudem können ebenfalls Mischungen der vorgenannten Stoffe eingesetzt werden.

Ein erfindungsgemäß verwendetes Puffersystem umfasst in der Regel eine Mischung aus einer schwachen Säure und ihrer konjugierten Base beziehungsweise umgekehrt. Auch Ampholyte können verwendet werden. Die im Rahmen der vorliegenden Erfindung eingesetzten Puffer sind insbesondere ausgewählt aus Acetatpuffer, Phosphatpuffer, Carbonatpuffer, Citratpuffer, Tartratpuffer, Bernsteinsäurepuffer, TRIS, HEPES, HEPPS, MES, Michaelis-Puffer oder Mischungen hieraus. Die vorliegende Erfindung ist jedoch nicht auf die vorgenannten Systeme beschränkt. Im Prinzip lässt sich jedes Puffersystem verwenden, das derart eingestellt werden kann, dass der beanspruchte pH-Bereich einstellbar ist.

In einer bevorzugten Ausführungsform der Erfindung basiert das Puffersystem auf organischen Carbonsäuren und ihren konjugierten Basen. Die organischen Carbonsäuren weisen besonders bevorzugt eine, zwei oder drei Carbonsäuregruppen auf. Ganz besonders bevorzugt basiert das Puffersystem auf Essigsäure, Bernsteinsäure, Weinsäure, Äpfelsäure oder Zitronensäure und der jeweiligen konjugierten Base. Zudem können ebenfalls Mischungen der vorgenannten Stoffe eingesetzt werden.

In weiterer Ausgestaltung des erfindungsgemäßen Mehrkomponentensystems beträgt die Konzentration des Puffersystems in der Komponente II) bevorzugt ≥ 0,001 und ≤ 2,0 Mol/l, besonders bevorzugt ≥ 0,01 und ≤ 1,0 Mol/l und ganz besonders bevorzugt ≥ 0,01 und ≤ 0,5 Mol/l. Diese Konzentrationen sind besonders bevorzugt, da einerseits eine ausreichende Pufferkapazität zur Verfügung gestellt wird und andererseits ein Auskristallisieren des Puffers aus der Komponente II) bei üblichen Lagerbedingungen nicht auftritt. Dies wäre beispielsweise beim Einsatz in Druckdosen nachteilig, da auskristallisierte Bestandteile die Mischeinrichtung oder die Düse der Druckdose verstopfen könnte.

In weiter bevorzugter Weise beträgt die Pufferkapazität der Komponente II) ≥ 0,01 Mol/l, insbesondere > 0,02 und ≤ 0,5 Mol/l.

Im Rahmen der vorliegenden Erfindung kann es von Vorteil sein, die Viskosität der Komponente II) anzupassen, beispielsweise um ihre Vermischbarkeit in einer Mischeinrichtung einer Zweikammer-Druckdose mit dem silanterminierte Präpolymer zu erleichtern. So kann die dynamische Viskosität der Komponente II) bei 23°C 10 bis 4000 mPas betragen, insbesondere 300 bis 1000 mPas. Die Viskosität lässt sich praktischerweise mittels Rotationsviskosimetrie nach DIN 53019 bei 23°C mit einem Rotationsviskosimeter bei einer Rotationsfrequenz von 18 s⁻¹ der Firma Anton Paar Germany GmbH, Ostfildern, DE bestimmen.

Nach einer besonders bevorzugten Ausgestaltung des erfindungsgemäßen Mehrkomponentensystems kann die Komponente II) einen Verdicker aufweisen. Mit Hilfe des Verdickers können einerseits die oben genannten Viskositäten eingestellt werden. Ein weiterer Vorteil des Verdickers besteht darin, dass dieser in gewissem Maße stabilisierende Eigenschaften auf den Schaum hat und insofern dazu beitragen kann, die Schaumstruktur bis zur Erreichung der Eigentragfähigkeit aufrecht zu halten.

Zudem hat sich überraschenderweise gezeigt, dass sich durch den Zusatz von Verdickern, insbesondere von Verdickern auf Stärke- oder Cellulosebasis, eine Reihe von handelsüblichen Treibgasen in der wässrigen Phase lösen. Da die Löslichkeit dieser Treibgase in der das Silan-Präpolymer enthaltenden Komponente I) eher weniger problematisch ist, wird hierdurch in den jeweiligen Kammern der Mehrkammerdruckdose eine Phasenseparation von Treibgas und der Komponente I) bzw. Komponente II) verhindert. Insofern befinden sich das Treibgas und die Komponente I) bzw. das Treibgas und die Komponente II) bis zum Verlassen der Druckdose in weitestgehend homogener Mischung. Nach dem Vermischen der beiden in der Dose getrennt vorgehaltenen Komponenten I) und II) in einer Mischdüse der Druckdose führt das in der Mischung gelöste Treibgas nach dem Verlassen der Druckdose zu einer starken Expansion dieser Mischung, so dass ein feinporiger Schaum erhalten wird. Folglich sind besonders vorteilhaft einzusetzende Verdicker ausgewählt aus Stärke, Stärkederivaten, Dextrin-, Polysaccharidderivaten wie Guargummi, Cellulose, Cellulosederivaten, insbesondere Celluloseethern, Celluloseestern, organischen vollsynthetischen Verdickern auf Basis von Polyacrylsäuren, Polyvinylpyrrolidonen, Poly(meth)acrylverbindungen oder Polyurethanen (assoziative Verdicker) sowie anorganischen Verdickern, wie Bentonite oder Kieselsäuren oder Mischungen hiervon. Als konkrete Beispiele seien Methylcellulose oder Carboxymethylcellulose, beispielsweise als Na-Salz, genannt.

Im Rahmen der vorliegenden Erfindung kann weiterhin vorgesehen sein, dass die Komponente I) eine Polyurethandispersion umfasst oder daraus besteht. Hierfür kann beispielsweise eine handelsübliche Polyurethandispersion eingesetzt werden, deren Konzentration gewünschtenfalls auch mit zusätzlichem Wasser verringert werden kann und die dann mit Hilfe der oben genannten Möglichkeiten in den genannten pH-Bereich gebracht wird. Die Verwendung einer Polyurethandispersion ist vorteilhaft, weil auf diese Weise die Treibgaslöslichkeit speziell in Bezug auf die oben genannten Alkane und Alkene in der wässrigen Phase gesteigert werden kann.

Ein weiterer Vorteil der vorgenannten pH-Werte besteht in Kombination mit der Polyurethandispersion zudem darin, dass es in diesen Bereichen in der Regel nicht zu einer Koagulation der Polymerpartikel der Polyurethan-Dispersion kommt, mit anderen Worten die Dispersion unter diesen Bedingungen lagerstabil ist. Überraschenderweise hat sich gezeigt, dass durch den Einsatz einer Polyurethandispersion die Löslichkeit handelsüblicher Treibgase in der wässrigen Komponente weiter gesteigert werden kann. Besonders bevorzugt ist deshalb der Einsatz einer Polyurethandispersion und eines Verdickers der vorgenannten Art.

Als Polyurethandispersion können im Prinzip sämtliche am Markt erhältliche Polyurethandispersionen verwendet werden. Jedoch ist es auch hier von Vorteil, Polyurethandispersionen einzusetzen, welche aus aromatenfreien Isocyanaten hergestellt wurden, da diese insbesondere für medizinische Anwendungen unbedenklicher sind. Zudem kann die Polyurethandispersion auch weitere Inhaltsstoffe beinhalten. In besonders bevorzugter Weise enthält die Polyurethandispersion 5 bis 65 Gew.-% Polyurethan, insbesondere 20 bis 60 Gew.-%.

In Weiterbildung des erfindungsgemäßen Mehrkomponentensystems beträgt das Gewichtsmittel des Polyurethans der Polyurethandispersion 10000 bis 1000000 g/Mol, insbesondere 20000 bis 200000 g/Mol, jeweils ermittelt über Gelpermeationschromatographie gegenüber Polystyrol-Standard in Tetrahydrofuran bei 23°C. Polyurethandispersionen mit solchen Molmassen sind besonders vorteilhaft, da diese lagerstabile Polyurethandispersionen darstellen, die zudem beim Abfüllen in Druckdosen eine gute Löslichkeit des Treibgases in der zweiten Komponente bewirken.

Die Mengenverhältnisse der Komponenten I) und II) des erfindungsgemäßen Mehrkomponentensystems werden vorteilhafterweise so zueinander eingestellt, dass eine vollständige Polymerisation erfolgt und dabei Komponente I) möglichst quantitativ umgesetzt wird. Beispielsweise liegen deshalb die Komponenten I) und II) des erfindungsgemäßen Mehrkomponentensystems in einem Volumenverhältnis von 1:10 bis 10:1 zueinander vor, vorzugsweise in einem Volumenverhältnis von 1:1 bis 5:1 zueinander, insbesondere 2:1 bis 3:1, besonders bevorzugt bei etwa 2,5:1.

Das erfindungsgemäße Mehrkomponentensystem besitzt eine hohe Aushärtegeschwindigkeit. Hierdurch kann mehr oder weniger unmittelbar nach dem Ausschäumen bereits eine selbsttragende Schaumstruktur ausgebildet werden, so dass der Schaum bis zur vollständigen Durchhärtung, was in der Regel nur wenige Minuten erfordert, praktisch nicht mehr zusammenfallen kann. Die Schaumstruktur bildet sich unter Mithilfe inerter Treibgase, die nach Öffnen eines Überdruckventils die viskosen Präpolymere aus der Kammer des Sprühsystems treiben. Die aushärtende Mischung der Komponenten wird durch das entweichende Treibgas zusätzlich geschäumt. Die vorliegende Erfindung stellt somit neben dem 1K System auch ein einsatzfähiges mehrkomponentiges Silanschaumsystem zur Verfügung, aus dem Polymerschäume mit hohem Porenvolumen erhältlich sind.

Nach einer bevorzugten Ausführungsform des erfindungsgemäßen alkoxysilanterminierten Präpolymers, der erfindungsgemäßen Zusammensetzung oder des erfindungsgemäßen Mehrkomponentensystems enthalten diese einen medizinischen und/ oder kosmetischen Wirkstoff.

Im Falle des Mehrkomponentensystems kann dieser in der Komponente I) und/oder II) vorgesehen sein. In diesem Zusammenhang ist es ebenfalls denkbar, den oder die Wirkstoffe in Form einer weiteren, d.h. dritten oder vierten Komponente vorzusehen und erst unmittelbar vor der Applikation der Zusammensetzung mit der Komponente I) und/oder II) zu vermischen. Aufgrund der Erhöhung der Komplexität der Zusammensetzung mit zunehmender Zahl an separaten Komponenten ist dieser Weg jedoch in der Regel nur dann sinnvoll, wenn die eingesetzten Wirkstoffe sowohl mit der Komponente I), als auch mit der Komponente II) unverträglich sind.

Die Wirkstoffe können als reiner Wirkstoff oder aber in verkapselter Form vorliegen, um beispielsweise eine zeitlich verzögerte Abgabe zu erzielen.

Als kosmetische Wirkstoffe kommen insbesondere solche Wirkstoffe in Betracht, welche hautpflegende Eigenschaften besitzen, beispielsweise feuchtigkeitsspendende oder hautberuhigende Wirkstoffe.

Als medizinische Wirkstoffe können im Rahmen der vorliegenden Erfindung eine Vielzahl von Wirkstofftypen und -klassen eingesetzt werden.

Ein solcher medizinischer Wirkstoff kann beispielsweise eine unter in vivo-Bedingungen Stickstoffmonoxid-freisetzende Komponente, bevorzugt L-Arginin oder eine L-Arginin-haltige oder eine L-Arginin freisetzende Komponente, besonders bevorzugt L-Arginin Hydrochlorid umfassen. Auch Prolin, Ornithin und/oder andere biogene Zwischenstufen wie beispielsweise biogene Polyamine (Spermin, Spermitin, Putrescin oder bioaktive künstliche Polyamine) können verwendet werden. Derartige Komponenten unterstützen bekanntermaßen die Wundheilung, wobei deren kontinuierliche mengenmäßig nahezu gleichmäßige Abgabe der Wundheilung besonders zuträglich ist.

Weitere erfindungsgemäß verwendbare Wirkstoffe umfassen mindestens eine Substanz ausgewählt aus der Gruppe der Vitamine oder Provitamine, Carotinoide, Analgetika, Antiseptika, Hämostyptika, Antihistaminika, antimikrobiellen Metalle oder deren Salze, pflanzlichen wundheilungsfördernden Substanzen oder Substanzgemische, Pflanzenextrakte, Enzyme, Wachstumsfaktoren, Enzyminhibitoren sowie Kombinationen hiervon.

Als Analgetika sind insbesondere nicht-steroidale Analgetika insbesondere Salicylsäure, Acetylsalicylsäure und deren Derivate z.B. Aspirin®, Anilin und dessen Derivate, Acetaminophen z.B. Paracetamol®, Antranilsäure und deren Derivate z.B. Mefenaminsäure, Pyrazol oder dessen Derivate z.B. Methamizol, Novalgin®, Phenazon, Antipyrin®, Isopropylphenazon und ganz besonders bevorzugt Arylessigsäuren sowie deren Derivate, Heteroarylessigsäuren sowie deren Derivate, Arylpropionsäuren sowie deren Derivate und Herteroarylpropionsäuren sowie deren Derivate z.B. Indometacin®, Diclophenac®, Ibuprofen®, Naxoprophen®, Indomethacin®, Ketoprofen®, Piroxicam® geeignet.

Als Wachstumsfaktoren sind insbesondere zu nennen: aFGF (Acidic Fibroplast Growth Factor), EGF (Epidermal) Growth Factor), PDGF (Platelet Derived Growth Factor), rhPDGF-BB (Becaplermin), PDECGF (Platelet Derived Endothelial Cell Growth Factor), bFGF (Basic Fibroplast Growth Factor), TGF α; (Transforming Growth Factor alpha), TGF β (Transforming Growth Factor beta), KGF (Keratinocyte Growth Factor), IGF1/IGF2 (Insulin-Like Growth Factor) und TNF (Tumor Necrosis Factor).

Als Vitamine oder Provitamine sind insbesondere die fettlöslichen oder wasserlöslichen Vitamine Vitamin A, Gruppe der Retinoide, Provitamin A, Gruppe der Carotenoide, insbesondere β-Carotin,

Vitamin E, Gruppe der Tocopherole, insbesondere α-Tocopherol, β-Tocopherol, γ-Tocopherol, δ-Tocopherol und α-Tocotrienol, β-Tocotrienol, γ-Tocotrienol und δ-Tocotrienol, Vitamin K, Phyllochinon insbesondere Phytomenadion oder pflanzliches Vitamin K, Vitamin C, L-Ascorbinsäure, Vitamin B 1, Thiamin, Vitamin B2, Riboflavin, Vitamin G, Vitamin B3, Niacin, Nikotinsäure und Nikotinsäureamid, Vitamin B5, Pantothensäure, Provitamin B5, Panthenol oder Dexpanthenol, Vitamin B6, Vitamin B7, Vitamin H, Biotin, Vitamin B9, Folsäure sowie Kombinationen hiervon geeignet.

Als Antiseptikum ist ein solches Mittel zu verwenden, das germizid, bakterizid, bakteriostatisch, fungizid, viruzid, virustatisch und/ oder allgemein mikrobiozid wirkt.

Insbesondere sind solche Stoffe geeignet, die ausgewählt werden aus der Gruppe Resorcinol, Iod, Iod-Povidon, Chlorhexidin, Benzalkoniumchlorid, Benzoesäure, Benzoylperoxid oder Cethylpyridiniumchlorid. Darüber hinaus sind als Antiseptika insbesondere auch antimikrobielle Metalle zu verwenden. Als antimikrobielle Metalle können insbesondere Silber, Kupfer oder Zink sowie deren Salze, Oxide oder Komplexe in Kombination oder alleine verwendet werden.

Als pflanzliche, wundheilungsfördernde Wirkstoffe sind im Zusammenhang mit der vorliegenden Erfindung insbesondere Extrakte der Kamille, Hamamelis-Extrakte z.B. Hamamelis virgina, Calendula-Extrakt, Aloe- Extrakt z.B. Aloe vera, Aloe barbadensis, Aloe feroxoder oder Aloe vulgaris, Grüntee- Extrakte, Meeresalgen-Extrakt z.B. Rotalgen- oder Grünalgen-Extrakt, Avocado-Extrakt, Myrre-Extrakt z.B. Commophora molmol, Bambus-Extrakte sowie Kombinationen hiervon zu nennen.

Gemäß einer besonders bevorzugten Ausführungsform des erfindungsgemäßen alkoxysilanterminierten Präpolymers, der erfindungsgemäßen Zusammensetzung oder des erfindungsgemäßen Mehrkomponentensystems ist vorgesehen, dass diese wenigstens einen medizinischen Wirkstoff enthält, der insbesondere ausgewählt ist aus Substanzen, die unter in vivo-Bedingungen Stickstoffmonoxid freisetzen, sowie Substanz ausgewählt aus der Gruppe der Vitamine oder Provitamine, Carotinoide, Analgetika, Antiseptika, Hämostyptika, Antihistaminika, antimikrobiellen Metalle oder deren Salze, pflanzlichen wundheilungsfördernden Substanzen oder Substanzgemische, Pflanzenextrakte, Enzyme, Wachstumsfaktoren, Enzyminhibitoren sowie Kombinationen hiervon.

Der Gehalt der Wirkstoffe richtet sich grundsätzlich in erster Linie an der medizinisch erforderlichen Dosis aus sowie auch an der Verträglichkeit mit den übrigen Bestandteilen der erfindungsgemäßen Zusammensetzung oder des Mehrkomponentensystems.

Ferner können dem erfindungsgemäßen alkoxysilanterminierten Präpolymer, der erfindungsgemä-ßen Zusammensetzung oder dem erfindungsgemäßen Mehrkomponentensystem auch weitere Hilfsstoffe zugesetzt werden. Hierfür kommen beispielsweise Schaumstabilisatoren, Thixotropiermittel, Verdicker, Antioxidantien, Lichtschutzmittel, Emulgatoren, Weichmacher, Pigmente, Füllstoffe, Additive zur Gebindestabilisierung, Biozide, Colösemittel, und/oder Verlaufshilfsmittel in Frage.

Als Schaumstabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich (Kirk-Othmer Encyclopedia of Chemical Technology, John Wiley & Sons, Vol. 24, S. 29). Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1-Tetradecanol (Myristylalkohol) und 1-Octadecanol (Stearylalkohol). Selbstverständlich können auch Gemische der genannten längerkettigen Monoalkohole eingesetzt werden.

Bevorzugt weisen diese Alkylpolyglycoside von der Glucose abgeleitete Strukturen auf. Besonders bevorzugt werden Alkylpolyglycoside der Formel (I) eingesetzt.

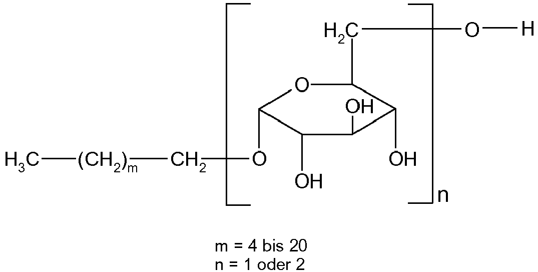

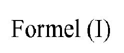

Bevorzugt ist m eine Zahl von 6 bis 20, besonders bevorzugt 10 bis 16.

Die Alkylpolyglycoside weisen bevorzugt einen HLB-Wert von weniger als 20, besonders bevorzugt von weniger als 16 und ganz besonders bevorzugt von weniger als 14 auf, wobei sich der HLB nach der Formel HLB = 20 · Mh/M errechnet, wobei Mh die Molmasse des hydrophilen Anteils eines Moleküls und M die Molmasse des gesamten Moleküls ist (Griffin, W.C.: Classification of surface active agents by HLB, J. Soc. Cosmet. Chem. 1, 1949).

Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt.

Zudem können zur Verbesserung der Schaumeigenschaften des resultierenden Schaums an sich bekannte einwertige Alkohole sowie Mischungen hieraus verwendet werden. Dies sind einwertige Alkohole, wie Ethanol, Propanol, Butanol, Decanol, Tridecanol, Hexadecanol, sowie monofunktionelle Polyetheralkohole und Polyesteralkohole.

Diese Schaumstabilisatoren können im Falle des Mehrkomponentensystems der Komponente I) und/ oder vorzugsweise der Komponente II) zugegeben werden, sofern keine chemische Reaktion mit den jeweiligen Komponenten auftritt. Dabei beträgt der Gesamtgehalt an diesen Verbindungen bezogen auf die erfindungsgemäße Zusammensetzung oder das Mehrkomponentensystem insbesondere 0,1 bis 20 Gew.-%, bevorzugt 1 bis 10 Gew.-%.

Das erfindungsgemäße alkoxysilanterminierte Präpolymer, die erfindungsgemäße Zusammensetzung oder das erfindungsgemäße Mehrkomponentensystem ist für eine Vielzahl von Applikationen einsetzbar. So eignen sie sich beispielsweise für sämtliche Anwendungsgebiete, in denen die im Stand der Technik bekannten, vorbezeichneten Polyurethanschäume und auch α- bzw. γ-Silanschäume vorgeschlagen werden, also für den Baubereich, zur Isolation von Rohren oder auch zum Ausschäumen von Hohlräumen in Maschinen.

Ein weiterer Gegenstand der vorliegenden Erfindung ist ein Formkörper, erhältlich durch Polymerisation eines erfindungsgemäßen alkoxysilanterminierten Präpolymers, einer erfindungsgemäßen Zusammensetzung oder eines erfindungsgemäßen Mehrkomponentensystems.

In den erstgenannten Fällen eines erfindungsgemäßen alkoxysilanterminierten Präpolymers oder einer erfindungsgemäßen Zusammensetzung kann die Polymerisation beispielsweise unter Einwirkung von Luftfeuchtigkeit erfolgen. Bei einem Mehrkomponentensystem erfolgt bevorzugt zunächst ein Vermischen der Komponenten und anschließend die vollständige Polymerisation der hierbei entstehenden Mischung. Diese Mischung polymerisiert bevorzugt bei Raumtemperatur in einem Zeitraum von maximal fünf Minuten vollständig, weiter bevorzugt innerhalb von drei Minuten, noch weiter bevorzugt innerhalb von einer Minute. Bei den einkomponentigen 1K Zusammensetzungen hängt die Dauer der vollständigen Polymerisation vornehmlich von der Dicke der ausgebrachten Schicht ab.

Unter vollständiger Polymerisation wird im Sinne der vorliegenden Erfindung verstanden, dass nicht nur eine äußerliche Hautbildung erfolgt, mit anderen Worten, dass die Außenhülle des Formkörpers nicht mehr klebrig ist, sondern dass die Präpolymere weitestgehend vollständig abreagiert sind. Dies wird im Rahmen der vorliegenden Erfindung in der Weise überprüft, dass der hergestellte Formkörper mit einem Finger für einige Sekunden vollständig eingedrückt wird und anschließend bei Wegnahme des Fingerdrucks von selbst in die Ausgangslage zurückkehrt.

Eine derart schnelle Aushärtung ist insbesondere bei medizinischen Anwendungen von Vorteil, speziell bei der Verwendung als sprühbare aufschäumende Wundauflage. Denn erst durch die äußerst schnelle Härtung kann die Wundauflage zeitnah einbandagiert werden und vom Patienten mechanisch belastet werden. Dadurch können lange Wartezeiten vermieden werden.

Überraschenderweise hat sich ebenfalls herausgestellt, dass dem erfindungsgemäßen alkoxysilanterminierten Präpolymer, der erfindungsgemäße Zusammensetzung oder dem erfindungsgemäße Mehrkomponentensystem neben diesen Einsatzzwecken auch Anwendungsbereiche im medizinischen Sektor eröffnet sind, da kein Einsatz toxischer oder reizender Verbindungen erforderlich ist.

Der medizinische Anwendungsbereich umfasst beispielsweise die Bereitstellung in-situ herstellbarer Wundauflagen. Dazu kann das erfindungsgemäße alkoxysilanterminierte Präpolymer, die erfindungsgemäße Zusammensetzung oder das erfindungsgemäße Mehrkomponentensystem als 1K oder 2K Schaumsystem der vorbezeichneten Art auf Hautverletzungen oder Verletzungen anderer Art aufgesprüht oder anderweitig aufgetragen werden. Dabei haften die ausgeschäumten Stoffe nicht merklich auf organischem Gewebe wie beispielsweise Wundgewebe und sind zudem aufgrund ihrer Porenstruktur in der Lage, Wundsekrete oder Blut aufzusaugen. Dies ist wohl darin begründet, dass das erfindungsgemäße alkoxysilanterminierte Präpolymer, die erfindungsgemäße Zusammensetzung oder das erfindungsgemäße Mehrkomponentensystem beim Aussprühen unter den vorgenannten Bedingungen wenigstens teilweise eine offene Porenstruktur ausbilden und damit saugfähig sind.

Für diesen Anwendungszweck ist auch die Polarität des erfindungsgemäßen alkoxysilanterminierte Präpolymers, der erfindungsgemäßen Zusammensetzung oder des erfindungsgemäßen Mehrkomponentensystems und der daraus erhältlichen Schäume von Vorteil, insbesondere im Vergleich zu den aus dem Stand der Technik bekannten auf Silanpolymeren mit unpolaren Seitenketten basierenden Systemen. So kann durch die Wahl des CO₂-Gehaltes des Polyethercarbonatpolyols beziehungsweise der Einstellung seiner Polarität die Hydrophilie des erhaltenen Schaums bedarfsgerecht modifiziert werden, so dass dieser beispielsweise ein besseres Aufnahmevermögen gegenüber wässrigen Flüssigkeiten, wie Blut oder Wundsekreten, entfaltet.

Ein weiterer Gegenstand der Erfindung ist ein erfindungsgemäßer Formkörper, der durch Polymerisation und Aufschäumen eines erfindungsgemäßen alkoxysilanterminierten Präpolymers, einer erfindungsgemäßen Zusammensetzung oder eines erfindungsgemäßen Mehrkomponentensystems erhältlich ist, und dadurch gekennzeichnet ist, dass der Formkörper eine Wundauflage ist.

Eine solche Wundauflage hat den Vorteil, dass durch die Schaumstruktur nicht nur Wundsekrete aufgenommen werden können, sondern hierdurch gleichzeitig ein mechanischer Schutz der Wunde vor Stößen und dergleichen erzielt wird. Auch der Druck von Kleidungsstücken auf der Wunde wird durch die Schaumstruktur teilweise aufgenommen.

Des Weiteren passt sich die gesprühte Wundauflage ideal den zumeist unregelmäßigen Konturen einer Wunde an, gewährleistet somit eine Wundabdeckung weitestgehend frei von Druckschmerzen, welche durch unpassende Wundauflage verursacht werden. Zusätzlich verkürzt die erfindungsgemäß hergestellte Wundauflage den für die Wundversorgung benötigten Zeitaufwand im Vergleich zu einer Versorgung mit einer traditionellen Wundauflage, da keine Anpassung mittels zeitaufwendigen Zuschnitts erforderlich ist.

Die Erfindung betrifft weiterhin auch eine Druckdose, enthaltend ein erfindungsgemäßes alkoxysilanterminiertes Präpolymer, eine erfindungsgemäße Zusammensetzung oder ein erfindungsgemäßes Mehrkomponentensystem, wobei die Druckdose insbesondere mit einem flüssigen Treibgas mit einem Druck von wenigstens 1,5 bar beaufschlagt ist. Als Treibgase kommen vor allem die bereits oben näher spezifizieren druckverflüssigten Alkane und Alkene in Frage.

In bevorzugter Weise kann zudem in die Druckdose höchstens so viel Treibgas eingefüllt sein, wie der Löslichkeit des Treibgases in der Zusammensetzung beim Fülldruck entspricht. Die Löslichkeit kann über die vorstehend erläuterte fehlende Phasenseparation nach einer Stunde ermittelt werden.

Die Druckdose kann insbesondere als Zwei- oder allgemein als Mehrkammerdruckdose mit einem Auslassventil und einer Mischdüse ausgestaltet sein, wobei die Komponente I) des erfindungsgemäßen Mehrkomponentensystems in einer ersten Kammer der Zweikammerdruckdose eingefüllt ist und die zweite Kammer die Komponente II) enthält, wobei die erste oder beide Kammern mit einem Flüssigtreibgas unter Überdruck beaufschlagt sind, insbesondere mit einem Druck von wenigstens 1,5 bar. Das Flüssigtreibgas in beiden Kammern kann gleich oder verschieden sein.

Nach einer weiteren Ausführungsform der erfindungsgemäßen Druckdose sind die Treibgase sowohl in der Komponente I), als auch in der Komponente II) löslich, wobei die Löslichkeit bei einem Fülldruck von mindestens 1,5 bar und bei einer Temperatur von 20°C wenigstens 3 Gew.-% beträgt und wobei insbesondere höchstens so viel Treibgas eingefüllt ist, wie der Löslichkeit entspricht. Auf diese Weise wird dafür gesorgt, dass der ausgesprühte Schaum eine gleichbleibende Qualität besitzt, weil nicht aus einer der Kammern zu Beginn des Sprühvorgangs nur Treibgas entweicht und damit das Mischungsverhältnis zwischen Komponente I) und II) nicht optimal ist. Hierfür kommen vor allem Mehrkomponentensysteme in Betracht, die in der Komponente II) einen der vorgenannten Verdicker und/ oder eine Polyurethandispersion aufweisen.

Ein weiterer Vorteil ist darin begründet, dass aufgrund der Löslichkeit des Treibgases in den Kammern der Druckdose keine Phasenseparation zwischen Komponente I) bzw. II) und dem Treibgas entsteht. Das Treibgas entweicht deshalb erst beim Auslösen der Druckdose und Vermischen der Komponente I) und II) und schäumt diese Mischung dabei auf. Die sehr schnelle Aushärtungszeit des erfindungsgemäßen Mehrkomponentensystems führt dazu, dass die durch das Treibgas aufgeschäumte Schaumstruktur "eingefroren" wird und nicht in sich zusammenfällt.

Der vorgenannte Effekt wird durch den Einsatz eines Verdickers der vorgenannten Art und/ oder einer Polyurethandispersion in der Komponente II) verstärkt, da sowohl der Verdicker als auch die Dispersion in gewissem Maße stabilisierende Eigenschaften auf den Schaum hat. Eine Treibgaslöslichkeit von wenigstens 3 Gew.-% ist von Vorteil, um ein ausreichendes Aufschäumen der ausgebrachten Mischung sicherzustellen. Vorzugsweise enthält die Komponente I) einen Gehalt von 10 bis 40 Gew.-% Treibgas, besonders bevorzugt 15 bis 30 Gew.-% und die Komponente II) einen Gehalt von 3 bis 20 Gew.-% Treibgas, besonders bevorzugt 5 bis 15 Gew.-% jeweils bezogen auf das resultierende Gesamtgewicht der jeweiligen Mischung. Hierbei kann durch die Menge an eingefüllter bzw. in den einzelnen Komponenten gelöster Treibgasmenge auch die Schaumstruktur beeinflusst werden. So führt eine höhere Treibgasmenge in der Regel zu einem Schaum geringerer Dichte.

Auch wenn die Bereitstellung des erfindungsgemäßen alkoxysilanterminierten Präpolymers, der erfindungsgemäßen Zusammensetzung oder des erfindungsgemäße Mehrkomponentensystems in Druckdosen eine komfortable Möglichkeit darstellt, ist die Erfindung jedoch nicht hierauf beschränkt. So lassen sich das erfindungsgemäße alkoxysilanterminierte Präpolymer, die erfindungsgemäße Zusammensetzung oder das erfindungsgemäße Mehrkomponentensystem auch ohne weiteres als Gießmasse verwenden, die entweder an der Luft oder durch vorheriges Vermischen mit einem protischen Lösungsmittel, wie Wasser, aushärtet.

Die vorliegende Erfindung wird im Folgenden anhand von Ausführungsbeispielen näher erläutert:

### Beispiele

### Allgemeines:

Alle folgenden Mengenangaben, Anteile und Prozentanteile sind, soweit nicht anders angegeben, auf das Gewicht und die Gesamtmenge bzw. auf das Gesamtgewicht der Zusammensetzungen bezogen.

Sofern nicht abweichend vermerkt, beziehen sich alle analytischen Messungen auf Messungen bei Temperaturen von 23°C.

### Methoden:

Der Anteil an eingebautem CO₂ in den Polyethercarbonatpolyolen wurden mittels ¹H-NMR (Firma Bruker, DPX 400, 400 MHz; Pulsprogramm zg30, Wartezeit d1: 5s, 100 Scans) bestimmt. Die Probe wurde jeweils in deuteriertem Chloroform gelöst. Als interner Standard wurde dem deuterierten Lösungsmittel Dimethyltherephthalat (2 mg auf 2 g CDCl₃) zugegeben. Die relevanten Resonanzen im ¹H-NMR (bezogen auf CHCl₃ = 7,24 ppm) sind wie folgt:
Carbonat, resultierend aus im Polyethercarbonatpolyol eingebautem Kohlendioxid (Resonanzen bei 5,2 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.
Der Molanteil des im Polymer eingebauten Carbonates, der Polyetherpolyolanteile sowie des nicht abreagierten PO werden durch Integration der entsprechenden Signale ermittelt.

Das zahlenmittlere Molekulargewicht Mₙ wird wie folgt bestimmt: Zunächst wird das Polyol mit Essigsäureanhydrid und Pyridin versetzt. Nach erfolgter Reaktion wird die OH-Zahl gemäß DIN 53240-1 durch anschließende Rücktitration der entstehenden Essigsäure mit alkoholischer Kaliumhydroxidmaßlösung experimentell ermittelt. Die OH-Zahl wird in mg KOH pro Gramm Polyol angegeben. Aus der OH-Zahl wird über die Formel *zahlenmittleres Molekulargewicht Mₙ* = *56 x 1000 x OH-Funktionalität* / *OH-Zahl* das zahlenmittlere Molekulargewicht Mₙ errechnet.

NCO-Gehalte wurden, wenn nicht ausdrücklich anders erwähnt, volumetrisch gemäß DIN-EN ISO 11909 bestimmt.

Die Kontrolle auf freie NCO-Gruppen wurde mittels IR-Spektroskopie (Bande bei 2260 cm⁻¹) durchgeführt.

Die angegebenen Viskositäten wurden mittels Rotationsviskosimetrie nach DIN 53019 bei 23°C mit einem Rotationsviskosimeter bei einer Rotationsfrequenz von 18 s⁻¹ der Firma Anton Paar Germany GmbH, Ostfildern, DE bestimmt.

Die maximal lösliche Treibgasmenge wurde bei 20°C in "Schaugläsern zur optischen Prüfung von Aerosolen" der Firma Pamasol Willi Mäder AG, CH ermittelt. Die maximal lösliche Treibgasmenge bezieht sich auf das Gewichtsverhältnis von Treibgas zur zu untersuchenden Substanz/Mischung und war erreicht, sobald das Treibgas gerade noch dauerhaft (> 1h) keine zweite Phase ausbildete.

Da eine Viskositätsmessung unter Treibgasbedingungen technisch nicht machbar ist, werden Viskositäten von STP/Treibgas-Lösungen aufgrund der Fließgeschwindigkeit bei 5 % Gefälle in Schaugläsern im Vergleich zu Referenzlösungen mit zuvor bestimmter Viskosität (wässrige Lösungen unterschiedlicher Konzentrationen von Walocel CRT 30 G) abgeschätzt.

Zum Ausschäumen der Mischungen wurde eine 2K-Sprühapparatur verwendet und in der Weise befüllt, wie in der WO 2012/022686 und WO 2012/022685 beschrieben wurde.

### Verwendete Substanzen und Abkürzungen:

- HDI:: Hexamethylen-1,6-diisocyanat
- Geniosil® XL 926:: [(Cyclohexylamino)methyl]triethoxysilan Wacker Chemie AG, München, DE)
- Walocel CRT 30G:: Carboxymethylcellulose, Natriumsalz (Dow Deutschland Anlagengesellschaft mbH, Schwalbach, DE)
- P/B 2,7:: Mischung aus Propan und iso-Butan, so dass bei 20°C ein Gasdruck von 2,7 bar resultiert
- Polyethercarbonatpolyol 1:: Polyethercarbonatdiol auf Basis von Propylenoxid und CO₂ mit einer OH-Zahl von 58 mg KOH/g (Mₙ = 1931 g/mol) und einem eingebauten CO₂-Gehalt von 15,1 Gew.-% und einer OH-Funktionalität von 2.
- Polyethercarbonatpolyol 2:: Polyethercarbonatdiol auf Basis von Propylenoxid und CO₂ mit einer OH-Zahl von 55,5 mg KOH/g (Mₙ = 2018 g/mol) und einem eingebauten CO₂-Gehalt von 18,2 Gew.-% und einer OH-Funktionalität von 2.

Die folgenden Beispiele zeigen die Herstellung der silanterminierten Präpolymere und ihre Verwendung.

### Beispiel 1: Herstellung Präpolymer P1

Zu einer Mischung aus 800 g Polyethercarbonatpolyol 1 und 1,89 g Dibutylphosphat wurden bei 60-65 °C innerhalb von 15 min 1044,56 g Hexamethylendiisocyanat (HDI) zugetropft. Danach wurde die Mischung 1,5 Stunden bei 80 °C gerührt. Der NCO-Gehalt dieser Mischung betrug 25,9%.

Das überschüssige HDI wurde durch Dünnschichtdestillation bei 140 °C und 0,15 mbar entfernt. Man erhielt ein Präpolymer mit einem NCO-Gehalt von 3,74 %.

### Beispiel 2: Herstellung Präpolymer P2

Zu einer Mischung aus 251,41 g Hexamethylendiisocyanat und 0,45 g Dibutylphosphat wurden bei 58-62 °C innerhalb von 45 min 213,63 g Polyethercarbonatpolyol 2 zugetropft. Danach wurde die Mischung 1 Stunde bei 80 - 82 °C gerührt. Der NCO-Gehalt dieser Mischung betrug 24,9 %.

Das überschüssige HDI wurde durch Dünnschichtdestillation bei 120 °C und 0,03 mbar entfernt. Man erhielt ein Präpolymer mit einem NCO-Gehalt von 3,51 %.

### Beispiel 3: Herstellung des Präpolymers P3

Zu einem Gemisch aus 1032 g eines Polyalkylenoxids mit einer Molmasse von 4000 g/mol gestartet auf 1,2-Propylenglykol, einem Ethylenoxidgewichtsanteil von 13 % und Propylenoxidgewichtsanteil von 86 %, das zuvor bei 80°C während 1h bei einem Druck von 0,1 mbar getrocknet wurde, und 1,8 g Benzoylchlorid wurde bei 80°C innerhalb von 30 Minuten 650 g HDI zugetropft und für 4h nachgerührt. Das überschüssige HDI wurde durch Dünnschichtdestillation bei 130°C und 0,03 mbar entfernt. Man erhielt ein Präpolymer mit einem NCO-Gehalt von 1,82 %.

### Beispiel 4: Herstellung des Präpolymers P4

Zu einem Gemisch aus 246,7 g eines Polyalkylenoxids mit einer Molmasse von 4000 g/mol gestartet auf 1,2-Propylenglykol, einem Ethylenoxidgewichtsanteil von 30 % und Propylenoxidgewichtsanteil von 70 %, das zuvor bei 80°C während 1h bei einem Druck von 0,1 mbar getrocknet wurde, und 0,43 g Benzoylchlorid wurde bei 80°C innerhalb von 20 Minuten 155,2 g HDI zugetropft und für 3 h bei 80 °C nachgerührt. Das überschüssige HDI wurde durch Dünnschichtdestillation bei 140°C und 0,03 mbar entfernt. Man erhielt ein Präpolymer mit einem NCO-Gehalt von 1,88 %.

### Beispiel 5: Herstellung des Präpolymers P5

Zu 500,0 g Hexamethylendiisocyanat und 0,90 g Isophthalsäuredichlorid wurden bei 60 °C langsam geschmolzenes Desmophen C 2200 (Polycarbonatdiol aus Dimethylcarbonat und 1,6-Hexandiol, Mₙ=2000 g/mol), welches vorher 1 h bei 100 °C und einem Druck von 0,2 mbar entwässert wurde, zugegeben. Es wurde eine Stunde bei 60 °C gerührt, der NCO-Wert der Reaktionsmischung betrug 26,4 %. Das überschüssige HDI wurde bei einer Temperatur von 140°C-150 °C in einer Kugelrohrdestillationsapparatur abdestilliert. Der verbleibende Rückstand (Rest-NCO-Wert 3,7 %), bestehend aus dem gewünschten Präpolymer, verfestigte sich bei Raumtemperatur.

### Beispiel 6: Herstellung des silanterminierten Präpolymers STP1 (erfindungsgemäß)

150 g des Präpolymers P1 wurden bei 30 °C innerhalb von 15 min mit 36,41 g Geniosil XL 926 versetzt. Die Reaktion war leicht exotherm, die Temperatur stieg bis maximal 47 °C. Nach weiteren 2 Stunden Rühren bei 30-40 °C konnte die vollständige Umsetzung zum silanterminierten Präpolymer (STP) IR-spektroskopisch nachgewiesen werden.

### Beispiel 7: Herstellung des silanterminierten Präpolymers STP2 (erfindungsemäß)

100 g des Präpolymers P2 wurden bei 40-50 °C innerhalb von 15 min mit 23,0 g Geniosil XL 926 versetzt. Die Reaktion war leicht exotherm, die Temperatur stieg bis maximal 50 °C. Nach einer weiteren Stunde Rühren bei 40-50 °C konnte die vollständige Umsetzung zum silanterminierten Präpolymer (STP) IR-spektroskopisch nachgewiesen werden.

### Beispiel 8: Herstellung des silanterminierten Präpolymers STP3 (erfindungsemäß)

Eine Mischung aus 50 g des Präpolymers P2 und 50 g des Präpolymers P3 wurden bei 40-50 °C innerhalb von 15 min mit 18,24 g Geniosil XL 926 versetzt. Die Reaktion war leicht exotherm, die Temperatur stieg bis maximal 50 °C. Nach einer weiteren Stunde Rühren bei 40-50 °C konnte die vollständige Umsetzung zum silanterminierten Präpolymer (STP) IR-spektroskopisch nachgewiesen werden.

### Beispiel 9: Herstellung des Silanterminierten Präpolymers STP4 (erfindungsgemäß)

90 g des Präpolymers P1 und 10 g des Präpolymers P3 wurden bei 30 °C innerhalb von 15 min mit 22,96 g Geniosil XL 926 versetzt. Nach einer weiteren Stunde Rühren bei 30-40 °C konnte die vollständige Umsetzung zum silanterminierten Präpolymer (STP) IR-spektroskopisch nachgewiesen werden.

### Beispiel 10: Herstellung des silanterminierten Präpolymers STP5 (erfindungsgemäß)

90 g des Präpolymers P1, 10 g des Präpolymers P3 und 10,67 g des Präpolymers P4 wurden bei 30 °C innerhalb von 15 min mit 23,81 g Geniosil XL 926 versetzt. Nach einer weiteren Stunde Rühren bei 30-40 °C konnte die vollständige Umsetzung zum silanterminierten Präpolymer (STP) IR-spektroskopisch nachgewiesen werden.

### Beispiel 11: Herstellung des silanterminierten Präpolymers STP6 und Verwendung (Vergleich)

8,0 g des Präpolymers P5 wurde bei 40 - 50 °C als viskose Flüssigkeit in ein Glasröhrchen eingewogen und mit 2,0 g Geniosil XL 926 versetzt. Die Reaktion verlief leicht exotherm, nach beendeter Reaktion stellte man einen sehr starken Anstieg der Viskosität fest. Beim Abkühlen auf RT wurde das erhaltene silanterminierte Präpolymer fest.

Die Untersuchung der Treibgasverträglichkeit wurde in "Schaugläsern zur optischen Prüfung von Aerosolen" der Firma Pamasol Willi Mäder AG, CH durchgeführt. Etwa 500 mg dieses silanterminierten Präpolymers STP6 wurden in die Röhrchen eingefüllt und unter Druck mit den Treibgasen iso-Butan/Propan und Dimethylether versetzt. In keinem der Treibgase war das Präpolymer ausreichend löslich. Ein Sprühversuch zur Herstellung eines neuen Schaums auf Basis von Desmophen C 2200 wie in den anderen Beispielen beschrieben ist somit nicht möglich.

### Beispiel 12: Verschäumung von STP1 (erfindungsgemäße Verwendung)

12,4 g STP1 wurden in 3,3 g P/B 2,7 gelöst. Als zweite Komponente wurde ein Phosphatpuffer benutzt. Hierzu wurden 9,078 g KH₂PO₄ in 1 L Wasser gelöst, als zweite Lösung wurden 11,876 g Na₂HPO₄ in 1 L Wasser gelöst. 150 mL der Na₂HPO₄-Lösung wurden mit der KH₂PO₄-Lösung auf 100 mL aufgefüllt. Der pH dieses Phosphatpuffers betrug 6,1, die Pufferkonzentration dieser Lösung beträgt 0,069 Mol/l. Diese Pufferlösung wurde mit Walocel CRT 30G auf eine Viskosität von ca. 500 mPas eingestellt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 20 Minuten einen vollständig ausgehärteten Schaum.

### Beispiel 13: Verschäumung von STP1 (erfindungsgemäße Verwendung)

12,1 g STP1 wurden in 3,2 g P/B 2,7 gelöst. Als zweite Komponente wurde eine Mischung aus einem Bernsteinsäurepuffer und Glycerin hergestellt. Hierzu wurden 23,62 g Bernsteinsäure mit Wasser auf 1000 mL aufgefüllt. 25 mL dieser Lösung werden mit 25 mL 0,1 M Natronlauge vermischt und mit Wasser auf 1000 mL aufgefüllt und mit Walocel CRT 30G auf eine Viskosität von ca. 500 mPas eingestellt. Der pH dieses Puffers beträgt 4,0, die Konzentration des Puffers beträgt 0,05 Mol/1. 60 mL dieser Pufferlösung werden mit 40 mL der Glycerinlösung vermischt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 40 Sekunden einen vollständig ausgehärteten Schaum.

### Beispiel 14: Verschäumung von STP4 (errindungsgemäße Verwendung)

11,7 g STP4 werden in 3,1 g P/B 2,7 gelöst. Als zweite Komponente wurde ein Phosphatpuffer benutzt. Hierzu wurden 9,078 g KH₂PO₄ in 1 L Wasser gelöst, als zweite Lösung wurden 11,876 g Na₂HPO₄ in 1 L Wasser gelöst. 150 mL der Na₂HPO₄-Lösung wurden mit der KH₂PO₄-Lösung auf 1000 mL aufgefüllt. Der pH dieses Phosphatpuffers betrug 6,1, die Pufferkonzentration dieser Lösung beträgt 0,069 Mol/l. Diese Pufferlösung wurde mit Walocel CRT 30G auf eine Viskosität von ca. 500 mPas eingestellt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 2 Minuten einen vollständig ausgehärteten Schaum.

### Beispiel 15: Verschäumung von STP5 (erfindungsgemäße Verwendung)

12,3 g STP5 werden in 2,5 g P/B 2,7 gelöst. Als zweite Komponente wurde ein Phosphatpuffer benutzt. Hierzu wurden 9,078 g KH₂PO₄ in 1 L Wasser gelöst, als zweite Lösung wurden 11,876 g Na₂HPO₄ in 1 L Wasser gelöst. 150 mL der Na₂HPO₄-Lösung wurden mit der KH₂PO₄-Lösung auf 1000 mL aufgefüllt. Der pH dieses Phosphatpuffers betrug 6,1, die Pufferkonzentration dieser Lösung beträgt 0,066 Mol/l. Diese Pufferlösung wurde mit Walocel CRT 30G auf eine Viskosität von ca. 500 mPas eingestellt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 2 Minuten einen vollständig ausgehärteten Schaum.

### Beispiel 16: Verschäumung von STP2 (erfindungsgemäße Verwendung)

12,1 g STP2 wurden in 3,2 g P/B 2,7 gelöst. Als zweite Komponente wurde eine Mischung aus einem Bernsteinsäurepuffer und Glycerin hergestellt. Hierzu wurden 1,18 g Bernsteinsäure in 60 g Wasser gelöst und mit 40 g 0,1 M NaOH gemischt. Die erhaltene Pufferlöung wurde mit Walocel CRT 30G auf eine Viskosität von ca. 500 mPas eingestellt. Der pH dieser Pufferlösung betrug 4,0, die Konzentration des Puffergemisches betrug 0,1 Mol/l. 50 mL dieser Pufferlösung werden mit 50 mL Glycerin vermischt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 1,5 Minuten einen vollständig ausgehärteten Schaum.

### Beispiel 17: Verschäumung von STP3 (erfindungsgemäße Verwendung)

11,9 g STP3 wurden in 3,4 g P/B 2,7 gelöst. Als zweite Komponente wurde eine Mischung aus einem Bernsteinsäurepuffer und Glycerin hergestellt. Hierzu wurden 1,18 g Bernsteinsäure in 60 g Wasser gelöst und mit 40 g 0,1 M NaOH gemischt. Der pH dieser Pufferlösung betrug 4,0, die Konzentration des Puffergemisches betrug 0,1 Mol/l. Die erhaltene Pufferlöung wurde mit Walocel CRT 30G auf eine Viskosität von ca. 500 mPas eingestellt. 50 mL dieser Pufferlösung werden mit 50 mL Glycerin vermischt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 1,5 Minuten einen vollständig ausgehärteten Schaum.

### Beispiel 18: Verschäumung von STP3 (erfindungsgemäße Verwendung)

12,0 g STP2 wurden in 3,4 g P/B 2,7 gelöst. Als zweite Komponente wurde ein Phosphatpuffer benutzt. Hierzu wurden 9,078 g KH₂PO₄ in 1 L Wasser gelöst, als zweite Lösung wurden 11,876 g Na₂HPO₄ in 1 L Wasser gelöst. 150 mL der Na₂HPO₄-Lösung wurden mit der KH₂PO₄-Lösung auf 1000 mL aufgefüllt. Der pH dieses Phosphatpuffers betrug 6,1, die Pufferkonzentration dieser Lösung beträgt 0,069 Mol/l. Diese Pufferlösung wurde mit Walocel CRT 30G auf eine Viskosität von ca. 500 mPas eingestellt.

Die beiden Komponenten wurden einzeln in jeweils eine Kammer einer mit Pressluft betriebenen 2K-Sprühapparatur gefüllt, wobei die Kammern der Sprühapparatur in einem Volumenverhältnis von 2,5 (STP) zu 1 (Pufferlösung) zueinander stehen. Ein synchrones Ausbringen beider Komponenten in diesem Volumenverhältnis ist konstruktiv sichergestellt und erfolgte über einen Statikmischer, in dem die Durchmischung erfolgte. Man erhielt nach 2,5 Minuten einen vollständig ausgehärteten Schaum.

## Patentansprüche

1. Alkoxysilanterminiertes Präpolymer, **dadurch gekennzeichnet, dass** es durch Umsetzung von wenigstens
A) einem Polyol,
B) einer Verbindung mit mindestens zwei Isocyanatgruppen und
C) einem Alkoxysilan, das wenigstens eine Isocyanatgruppe und/oder eine isocyanatreaktive Gruppe aufweist,
herstellbar ist, wobei das Polyol A) wenigstens ein Polyethercarbonatpolyol, welches durch Anlagerung von Kohlendioxid und Alkylenoxiden an H-funktionelle Startersubstanzen erhältlich ist, umfasst.

2. Alkoxysilanterminiertes Präpolymer nach Anspruch 1, **dadurch gekennzeichnet, dass** das Polyethercarbonatpolyol ein zahlenmittleres Molekulargewicht Mₙ von ≥ 500 und ≤ 6000 g/mol, bevorzugt ≥ 1000 und ≤ 5000 g/mol aufweist.

3. Alkoxysilanterminiertes Präpolymer nach Anspruch 1 oder 2, **dadurch gekennzeichnet, dass** das Polyethercarbonatpolyol einen Gehalt an Carbonatgruppen, berechnet als CO₂, von ≥ 3 und ≤ 35 Gew.-%, bevorzugt ≥ 5 und ≤ 30 Gew.-% und besonders bevorzugt ≥ 10 und ≤ 28 Gew.-% aufweist.

4. Alkoxysilanterminiertes Präpolymer nach einem der Ansprüche 1 bis 3, **dadurch gekennzeichnet, dass** das Polyethercarbonatpolyol durch Anlagerung von Kohlendioxid und Alkylenoxiden an H-funktionelle Startersubstanzen unter Verwendung von Multimetallcyanid-Katalysatoren erhältlich ist.

5. Alkoxysilanterminiertes Präpolymer nach einem der Ansprüche 1 bis 4, **dadurch gekennzeichnet, dass** das Polyethercarbonatpolyol ≥ 2 und ≤ 4, bevorzugt ≥ 2 und ≤ 3 OH-Gruppen aufweist.

6. Alkoxysilanterminiertes Präpolymer nach einem der Ansprüche 1 bis 5, **dadurch gekennzeichnet, dass** der Anteil des Polyethercarbonatpolyols an der Komponente A) bevorzugt ≥ 50 und ≤ 100 Gew.-%, besonders bevorzugt ≥ 80 und ≤ 100 Gew.-% beträgt.

7. Alkoxysilanterminiertes Präpolymer nach einem der Ansprüche 1 bis 6, **dadurch gekennzeichnet, dass** das Alkoxysilan der Komponente C) ein α-Alkoxysilan ist.

8. Alkoxysilanterminiertes Präpolymer nach einem der Ansprüche 1 bis 7, **dadurch gekennzeichnet, dass** als Komponente B) eine aliphatische und/oder cycloaliphatische Verbindung eingesetzt wird.

9. Alkoxysilanterminiertes Präpolymer nach einem der Ansprüche 1 bis 8, **dadurch gekennzeichnet, dass** es durch Umsetzung von wenigstens dem isocyanatreaktive Gruppen aufweisenden Alkoxysilan C) mit einem NCO-terminierten Polyurethanpräpolymer herstellbar ist, wobei das NCO-terminierte Polyurethanpräpolymer durch Umsetzung von wenigstens der isocyanatfunktionellen Verbindung B) mit dem Polyol A) herstellbar ist.

10. Verfahren zur Herstellung eines alkoxysilanterminierten Präpolymers nach einem der Ansprüche 1 bis 9 umfassend die folgenden Schritte:
• Umsetzung des Polyols A) mit der Verbindung B) zu einem NCO- oder OH-terminierten Polyurethanpräpolymer, und
• Umsetzung des NCO- oder OH-terminierten Polyurethanpräpolymers mit dem Alkoxysilan C) zum alkoxysilanterminierten Präpolymer.

11. Zusammensetzung, **dadurch gekennzeichnet, dass** diese wenigstens ein alkoxysilanterminiertes Präpolymer i) nach einem der Ansprüche 1 bis 9 und mindestens eine weitere Komponente umfasst.

12. Zusammensetzung nach Anspruch 11, **dadurch gekennzeichnet, dass** diese als weitere Komponente > 1 und ≤ 70 Gew.-% eines von i) verschiedenen Alkoxysilanterminierten Präpolymers enthält, welches als Polyol Komponente a) ein Polyetherpolyol und/oder ein Polyesterpolyol mit einem zahlenmittleren Molekulargewicht Mₙ von ≥ 500 und ≤ 7000 g/mol enthält.

13. Mehrkomponentensystem, umfassend wenigstens zwei getrennten Komponenten, wobei die erste Komponente I) ein alkoxysilanterminiertes Präpolymer nach einem der Ansprüche 1 bis 9 oder eine Zusammensetzung nach Anspruch 11 oder 12 umfasst und die zweite Komponente II) eine protische Verbindung, bevorzugt mindestens ein protisches Lösungsmittel oder ein Gemisch von protischen Lösungsmitteln umfasst.

14. Mehrkomponentensystem nach Anspruch 13, **dadurch gekennzeichnet, dass** die Komponente II) Wasser enthält.

15. Formkörper, erhältlich durch Polymerisation eines alkoxysilanterminierten Präpolymers nach einem der Ansprüche 1 bis 9, einer Zusammensetzung nach Anspruch 11 oder 12 oder eines Mehrkomponentensystems nach einem der Ansprüche 13 oder 14.

16. Druckdose, enthaltend ein alkoxysilanterminiertes Präpolymer nach einem der Ansprüche 1 bis 9, eine Zusammensetzung nach Anspruch 11 oder 12 oder ein Mehrkomponentensystem nach einem der Ansprüche 13 oder 14, wobei die Druckdose insbesondere mit einem flüssigen Treibgas mit einem Druck von wenigstens 1,5 bar beaufschlagt ist.

## Claims

1. Alkoxysilane-terminated prepolymer, **characterized in that** it is obtainable by reaction of at least
A) a polyol,
B) a compound having two or more isocyanate groups, and
C) an alkoxysilane having at least an isocyanate group and/or an isocyanate-reactive group,
wherein the polyol A) comprises at least a polyethercarbonatepolyol obtainable by addition of carbon dioxide and alkylene oxides onto H-functional starter molecules.

2. Alkoxysilane-terminated prepolymer according to Claim 1, **characterized in that** the polyethercarbonatepolyol has a number-average molecular weight Mₙ of ≥ 500 and ≤ 6000 g/mol, preferably ≥ 1000 and ≤ 5000 g/mol.

3. Alkoxysilane-terminated prepolymer according to Claim 1 or 2, **characterized in that** the polyethercarbonatepolyol has a content of carbonate groups, reckoned as CO₂, of ≥ 3 and ≤ 35 wt%, preferably ≥ 5 and ≤ 30 wt% and more preferably ≥ 10 and ≤ 28 wt%.

4. Alkoxysilane-terminated prepolymer according to any of Claims 1 to 3, **characterized in that** the polyethercarbonatepolyol is obtainable by addition of carbon dioxide and alkylene oxides onto H-functional starter molecules while using multimetal cyanide catalysts.

5. Alkoxysilane-terminated prepolymer according to any of Claims 1 to 4, **characterized in that** the polyethercarbonatepolyol has ≥ 2 and ≤ 4, preferably ≥ 2 and ≤ 3 OH groups.

6. Alkoxysilane-terminated prepolymer according to any of Claims 1 to 5, **characterized in that** the proportion of component A) which is attributable to the polyethercarbonatepolyol is preferably ≥ 50 and ≤ 100 wt%, more preferably ≥ 80 and ≤ 100 wt%.

7. Alkoxysilane-terminated prepolymer according to any of Claims 1 to 6, **characterized in that** the alkoxysilane of component C) is an α-alkoxysilane.

8. Alkoxysilane-terminated prepolymer according to any of Claims 1 to 7, **characterized in that** an aliphatic and/or cycloaliphatic compound is used as component B).

9. Alkoxysilane-terminated prepolymer according to any of Claims 1 to 8, **characterized in that** it is obtainable by reaction of at least the alkoxysilane C), having isocyanate-reactive groups, with an NCO-terminated polyurethane prepolymer, wherein the NCO-terminated polyurethane prepolymer is obtainable by reaction of at least the isocyanate-functional compound B) with the polyol A).

10. Process for preparing an alkoxysilane-terminated prepolymer according to any of Claims 1 to 9 comprising the steps of:
• reacting the polyol A) with the compound B) to form an NCO- or OH-terminated polyurethane prepolymer, and
• reacting the NCO- or OH-terminated polyurethane prepolymer with the alkoxysilane C) to form the alkoxysilane-terminated prepolymer.

11. Composition, **characterized in that** it comprises at least an alkoxysilane-terminated prepolymer i) according to any of claims 1 to 9 and at least one further component.

12. Composition according to Claim 11, **characterized in that** it contains as further component ≥ 1 and ≤ 70 wt% of an alkoxysilane-terminated prepolymer other than i), which contains a polyetherpolyol and/or a polyesterpolyol having a number-average molecular weight Mₙ of ≥ 500 and ≤ 7000 g/mol as polyol component a).

13. Multicomponent system comprising at least two separate components, wherein the first component I) comprises an alkoxysilane-terminated prepolymer according to any of Claims 1 to 9 or a composition according to Claim 11 or 12 and the second component II) comprises a protic compound, preferably at least one protic solvent or a mixture of protic solvents.

14. Multicomponent system according to Claim 13, **characterized in that** the component II) contains water.

15. Shaped articles obtainable by polymerization of an alkoxysilane-terminated prepolymer according to any of Claims 1 to 9, of a composition according to Claim 11 or 12 or of a multicomponent system according to either of Claims 13 and 14.

16. Pressurized can containing an alkoxysilane-terminated prepolymer according to any of Claims 1 to 9, a composition according to Claim 11 or 12 or a multicomponent system according to either of Claims 13 and 14, wherein the pressurized can is more particularly pressurized with a liquid blowing gas to a pressure of at least 1.5 bar.

## Revendications

1. Prépolymère à terminaison alcoxysilane, **caractérisé en ce qu'**il peut être fabriqué par mise en réaction d'au moins
A) un polyol,
B) un composé contenant au moins deux groupes isocyanate et
C) un alcoxysilane, qui comprend au moins un groupe isocyanate et/ou un groupe réactif avec les isocyanates,
le polyol A) comprenant au moins un polyéther-carbonate-polyol, qui peut être obtenu par addition de dioxyde de carbone et d'oxydes d'alkylène sur des substances de départ à fonction H.

2. Prépolymère à terminaison alcoxysilane selon la revendication 1, **caractérisé en ce que** le polyéther-carbonate-polyol présente un poids moléculaire moyen en nombre Mₙ ≥ 500 et ≤ 6 000 g/mol, de préférence ≥ 1 000 et ≤ 5 000 g/mol.

3. Prépolymère à terminaison alcoxysilane selon la revendication 1 ou 2, **caractérisé en ce que** le polyéther-carbonate-polyol présente une teneur en groupes carbonate, calculée en tant que CO₂, ≥ 3 et ≤ 35 % en poids, de préférence ≥ 5 et ≤ 30 % en poids, et de manière particulièrement préférée ≥ 10 et ≤ 28 % en poids.

4. Prépolymère à terminaison alcoxysilane selon l'une quelconque des revendications 1 à 3, **caractérisé en ce que** le polyéther-carbonate-polyol peut être obtenu par addition de dioxyde de carbone et d'oxydes d'alkylène sur des substances de départ à fonction H en utilisant des catalyseurs de cyanure de plusieurs métaux.

5. Prépolymère à terminaison alcoxysilane selon l'une quelconque des revendications 1 à 4, **caractérisé en ce que** le polyéther-carbonate-polyol comprend ≥ 2 et ≤ 4, de préférence ≥ 2 et ≤ 3 groupes OH.

6. Prépolymère à terminaison alcoxysilane selon l'une quelconque des revendications 1 à 5, **caractérisé en ce que** la proportion du polyéther-carbonate-polyol du composant A) est de préférence ≥ 50 et ≤ 100 % en poids, de manière particulièrement préférée ≥ 80 et ≤ 100 % en poids.

7. Prépolymère à terminaison alcoxysilane selon l'une quelconque des revendications 1 à 6, **caractérisé en ce que** l'alcoxysilane du composant C) est un α-alcoxysilane.

8. Prépolymère à terminaison alcoxysilane selon l'une quelconque des revendications 1 à 7, **caractérisé en ce qu'**un composé aliphatique et/ou cycloaliphatique est utilisé en tant que composant B).

9. Prépolymère à terminaison alcoxysilane selon l'une quelconque des revendications 1 à 8, **caractérisé en ce qu'**il peut être fabriqué par mise en réaction d'au moins l'alcoxysilane C) comprenant des groupes réactifs avec les isocyanates avec un prépolymère de polyuréthane à terminaison NCO, le prépolymère de polyuréthane à terminaison NCO pouvant être fabriqué par mise en réaction d'au moins le composé à fonction isocyanate B) avec le polyol A).

10. Procédé de fabrication d'un prépolymère à terminaison alcoxysilane selon l'une quelconque des revendications 1 à 9, comprenant les étapes suivantes :
- la mise en réaction du polyol A) avec le composé B) pour former un prépolymère de polyuréthane à terminaison NCO ou OH, et
- la mise en réaction du prépolymère de polyuréthane à terminaison NCO ou OH avec l'alcoxysilane C) pour former le prépolymère à terminaison alcoxysilane.

11. Composition, **caractérisée en ce que** celle-ci comprend au moins un prépolymère à terminaison alcoxysilane i) selon l'une quelconque des revendications 1 à 9 et au moins un autre composant.

12. Composition selon la revendication 11, **caractérisée en ce que** celle-ci contient en tant que composant supplémentaire ≥ 1 et ≤ 70 % en poids d'un prépolymère à terminaison alcoxysilane différent de i), qui contient en tant que composant polyol a) un polyéther-polyol et/ou un polyester-polyol ayant un poids moléculaire moyen en nombre Mₙ ≥ 500 et ≤ 7 000 g/mol.

13. Système multicomposant, comprenant au moins deux composants séparés, le premier composant I) comprenant un prépolymère à terminaison alcoxysilane selon l'une quelconque des revendications 1 à 9 ou une composition selon la revendication 11 ou 12, et le deuxième composant II) comprenant un composé protique, de préférence au moins un solvant protique ou un mélange de solvants protiques.

14. Système multicomposant selon la revendication 13, **caractérisé en ce que** le composant II) contient de l'eau.

15. Corps moulé, pouvant être obtenu par polymérisation d'un prépolymère à terminaison alcoxysilane selon l'une quelconque des revendications 1 à 9, d'une composition selon la revendication 11 ou 12, ou d'un système multicomposant selon l'une quelconque des revendications 13 ou 14.

16. Emballage aérosol, contenant un prépolymère à terminaison alcoxysilane selon l'une quelconque des revendications 1 à 9, une composition selon la revendication 11 ou 12, ou un système multicomposant selon l'une quelconque des revendications 13 ou 14, l'emballage aérosol étant notamment mis sous une pression d'au moins 1,5 bar avec un gaz propulseur liquide.
